(19) Europäisches Patentamt

European Patent Office

Office européen des brevets

(11) **EP 4 746 339 A1**

(12) **EUROPEAN PATENT APPLICATION**
published in accordance with Art. 153(4) EPC

(43) Date of publication:
**20.05.2026 Bulletin 2026/21**

(21) Application number: **23947044.6**

(22) Date of filing: **31.07.2023**

(51) International Patent Classification (IPC):
**H04L 9/08** (2006.01)

(52) Cooperative Patent Classification (CPC):
**H04L 9/08**

(86) International application number:
**PCT/CN2023/110348**

(87) International publication number:
**WO 2025/025095 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **WANG, Wenhui**
  **Shenzhen, Guangdong 518129 (CN)**
• **LIU, Fei**
  **Shenzhen, Guangdong 518129 (CN)**
• **WANG, Donghui**
  **Shenzhen, Guangdong 518129 (CN)**
• **SONG, Yurong**
  **Shenzhen, Guangdong 518129 (CN)**

(74) Representative: **Thun, Clemens
Mitscherlich PartmbB
Karlstraße 7
80333 München (DE)**

(54) **HOMOMORPHIC ENCRYPTION-BASED COMMUNICATION METHOD AND APPARATUS**

(57)    This application provides a homomorphic encryption-based communication method and a communication apparatus. A key generation party obtains a first key parameter, where the first key parameter is a key parameter related to an updated root key of a network device accessed by a terminal device. The key generation party derives a homomorphic encryption and decryption key based on the first key parameter using a homomorphic encryption and decryption algorithm, where the homomorphic encryption and decryption key is used for a homomorphic task in which the terminal device participates. Therefore, in communication systems, when information about the homomorphic task in which the terminal device participates changes, the key generation party can re-derive, based on an updated upper-level key of the homomorphic key, a homomorphic key used for the homomorphic task, thereby ensuring continuity of the homomorphic task of the terminal device.

400

S410: A key generation party obtains a first key parameter, where the first key parameter is a key parameter of an updated root key of a network device accessed by a terminal device

S420: The key generation party derives a homomorphic encryption and decryption key based on the first key parameter using a homomorphic encryption and decryption algorithm, where the homomorphic encryption and decryption key is used to execute a homomorphic task in which the terminal device participates

FIG. 4

EP 4 746 339 A1

## Description

## TECHNICAL FIELD

This application relates to the field of wireless communication technologies, and more specifically, to a homomorphic encryption-based communication method and a communication apparatus.

## BACKGROUND

To improve security and privacy of data use, homomorphic encryption technologies can be used to perform computational processing on data ciphertexts without exposing data plaintext, thereby implementing data value extraction while preserving privacy. For a homomorphic task, if homomorphic participants (a homomorphic encryption party, a homomorphic decryption party, a homomorphic computation party, and the like) are devices in a wireless communication network, for example, terminal devices, base stations, or network elements, when related information, for example, the homomorphic participant or a homomorphic encryption and decryption key in the homomorphic task in which the terminal device participates changes, how to ensure continuity of the homomorphic task in which the terminal device participates is an urgent problem to be resolved.

## SUMMARY

This application provides a homomorphic encryption-based communication method, to ensure continuity of a homomorphic task.

According to a first aspect, a homomorphic encryption-based communication method is provided. The method may be performed by a key generation party, or may be performed by a component (for example, a chip or a circuit) of a key generation party. This is not limited herein. For ease of description, the following uses an example in which the method is performed by the key generation party for description. The method may include: The key generation party obtains a first key parameter, where the first key parameter is a key parameter of an updated root key of a network device accessed by a terminal device. The key generation party derives a homomorphic encryption and decryption key based on the first key parameter using a homomorphic encryption and decryption algorithm, where the homomorphic encryption and decryption key is used for a homomorphic task in which the terminal device participates.

In the foregoing solution, in a communication system, when an upper-level key of the homomorphic key corresponding to the homomorphic task in which the terminal device participates changes, the key generation party can re-derive, based on an updated upper-level key of the homomorphic encryption and decryption key (the root key of the network device accessed by the terminal device), a homomorphic key used for the homomorphic task, thereby ensuring continuity of the homomorphic task of the terminal device.

In a possible implementation, when the key generation party is a first network device, that the key generation party obtains the first key parameter includes: The first network device receives the first key parameter from a second network device, where the second network device is a network device accessed by the terminal device before handover, and the first network device is a network device accessed by the terminal device after handover; or the first network device generates the first key parameter, where the first network device is the network device accessed by the terminal device.

In the foregoing solution, when the network device accessed by the terminal device switches, and an upper-level key of the homomorphic key corresponding to the homomorphic task in which the terminal device participates changes, the first network device (the network device accessed by the terminal device after handover) can obtain an updated upper-level key, to re-derive a homomorphic key, thereby ensuring continuity of the homomorphic task.

In a possible implementation, when the key generation party is a first network device, the method further includes: The first network device receives homomorphic capability information of the terminal device; and the first network device determines the homomorphic encryption and decryption algorithm based on the homomorphic capability information of the terminal device.

In the foregoing solution, the first network device can determine, based on the homomorphic capability information that is of the terminal device and that corresponds to the homomorphic task, the homomorphic encryption and decryption algorithm used to generate the homomorphic encryption and decryption key, thereby ensuring that the homomorphic task can be successfully executed.

In a possible implementation, when the key generation party is a first network device, that the first network device determines the homomorphic encryption and decryption algorithm based on the homomorphic capability information of the terminal device includes: The first network device receives homomorphic capability information of a third network device; and the first network device determines the homomorphic encryption and decryption algorithm based on the homomorphic capability information of the third network device and the homomorphic capability information of the terminal device, where the third network device is a device participating in executing the homomorphic task.

In the foregoing solution, the first network device can further determine, based on homomorphic capability information of another homomorphic participant of the homomorphic task, the homomorphic encryption and decryption algorithm used to generate the homomorphic encryption and decryption key, thereby ensuring that the homomorphic task can be successfully executed.

In a possible implementation, when the key generation party is a first network device, the method further includes: The first network device sends first indication information to the terminal device, where the first indication information indicates an identifier of the homomorphic encryption and decryption algorithm.

In the foregoing solution, the first network device indicates, to the terminal device, the homomorphic encryption and decryption algorithm used to generate the homomorphic encryption and decryption key, so that the terminal device can generate a same homomorphic encryption and decryption key, to complete the homomorphic task.

In a possible implementation, the first indication information is sent via non-access stratum (non-access stratum, NAS) signaling.

In the foregoing solution, after determining the homomorphic encryption and decryption algorithm, the first network device indicates the homomorphic encryption and decryption algorithm to the terminal device, so that the terminal device further re-derives a same homomorphic key based on the homomorphic encryption and decryption algorithm.

In a possible implementation, when the key generation party is a first network device, the method further includes: The first network device receives an identifier of the homomorphic encryption and decryption algorithm from a homomorphic management device (homomorphic encryption control function, HECF).

In the foregoing solution, the HECF having a homomorphic management capability can determine an algorithm used to determine the homomorphic key, and indicate the algorithm to the first network device, so that the first network device further derives the homomorphic key.

The HECF can perform key management (for example, derivation and distribution of the homomorphic key, and update and management of the homomorphic key) for the homomorphic task, capability management (for example, generation and storage of a homomorphic capability file) for the homomorphic task, homomorphic task management (for example, homomorphic task request management and homomorphic task scheduling management), and the like. This is not limited in this application.

In a possible implementation, when the key generation party is a homomorphic management device HECF, that the key generation party obtains the first key parameter includes: The HECF generates the first key parameter.

In the foregoing solution, when the network device accessed by the terminal device switches, and an upper-level key of the homomorphic key corresponding to the homomorphic task in which the terminal device participates changes, the HECF can update the root key (the upper-level key of the homomorphic key) corresponding to the network device accessed by the terminal device, to re-derive a homomorphic key, thereby ensuring continuity of the homomorphic task.

In a possible implementation, the method further includes: The HECF receives homomorphic capability information of the terminal device; and the HECF determines the homomorphic encryption and decryption algorithm based on the homomorphic capability information of the terminal device.

In the foregoing solution, the HECF can determine, based on the homomorphic capability information that is of the terminal device and that corresponds to the homomorphic task, the homomorphic encryption and decryption algorithm used to generate the homomorphic encryption and decryption key, thereby ensuring that the homomorphic task can be successfully executed.

In a possible implementation, that the HECF determines the homomorphic encryption and decryption algorithm based on the homomorphic capability information of the terminal device includes: The HECF receives homomorphic capability information of a third network device; and the HECF determines the homomorphic encryption and decryption algorithm based on the homomorphic capability information of the third network device and the homomorphic capability information of the terminal device, where the third network device is a device participating in executing the homomorphic task.

In the foregoing solution, the HECF can further determine, based on homomorphic capability information of another homomorphic participant of the homomorphic task, the homomorphic encryption and decryption algorithm used to generate the homomorphic encryption and decryption key, thereby ensuring that the homomorphic task can be successfully executed.

In a possible implementation, the method further includes: The HECF sends the homomorphic encryption and decryption key to a first network device and the terminal device, where the first network device is the network device accessed by the terminal device.

In the foregoing solution, after re-deriving the homomorphic encryption and decryption key, the HECF having a homomorphic management capability sends the homomorphic encryption and decryption key to a homomorphic encryption party and a homomorphic decryption party (the first network device and the terminal device), for the homomorphic encryption party and the homomorphic decryption party to execute the homomorphic task.

In a possible implementation, when the key generation party is a terminal device, that the key generation party obtains the first key parameter includes: The terminal device receives second indication information from a first network device, where the second indication information indicates that a root key of a network device accessed by the terminal device is updated, and the first network device is the network device accessed by the terminal device; and the terminal device generates the first key parameter based on the second indication information.

In the foregoing solution, the terminal device can learn of, based on an indication of the first network device, that an upper-level key of the homomorphic key corresponding to the homomorphic task in which the terminal device participates changes, so that the terminal device generates an updated upper-level key according to a preconfigured algorithm, thereby ensuring continuity of the homomorphic task.

In a possible implementation, the second indication information is sent via NAS security mode signaling in a mobility registration update procedure or handover signaling in a cell handover procedure.

In a possible implementation, the method further includes: The terminal device receives first indication information from the first network device or an HECF, where the first indication information indicates an identifier of the homomorphic encryption and decryption algorithm.

In the foregoing solution, the terminal device can learn of, based on an indication of the first network device or the HECF, the homomorphic encryption and decryption algorithm used to generate the homomorphic encryption and decryption key, to derive the homomorphic encryption and decryption key, so as to complete the homomorphic task.

In a possible implementation, that the key generation party derives the homomorphic encryption and decryption key based on the first key parameter using the homomorphic encryption and decryption algorithm includes: The key generation party derives the homomorphic encryption and decryption key based on the first key parameter, the homomorphic encryption and decryption algorithm, and a second key parameter, where the second key parameter includes at least one of the following: the identifier of the homomorphic encryption and decryption algorithm, a ciphertext modulus, a plaintext modulus, and a polynomial dimension.

In a possible implementation, the method further includes: The key generation party learns of a homomorphic task requirement, where the homomorphic task requirement indicates a parameter required for executing the homomorphic task; and that the key generation party derives the homomorphic encryption and decryption key based on the first key parameter using the homomorphic encryption and decryption algorithm includes: When the key generation party determines that the third network device meets the homomorphic task requirement, the key generation party derives the homomorphic encryption and decryption key based on the first key parameter, the homomorphic encryption and decryption algorithm, and the homomorphic task requirement, where the third network device is the device participating in executing the homomorphic task.

In the foregoing solution, when the key generation party determines that a homomorphic participant meets the homomorphic task requirement, the key generation party further derives the homomorphic encryption and decryption key, thereby avoiding unnecessary key derivation and saving resources.

In a possible implementation, the homomorphic capability information includes at least one of the following: a homomorphic capability type, the identifier of the homomorphic encryption and decryption algorithm, a homomorphic computation function identifier, a security level, a decryption circuit depth, and complexity of a ciphertext-based computation circuit. The information about the homomorphic task includes at least one of the following: a homomorphic task role, a homomorphic computation key, a homomorphic computation key size, a ciphertext modulus, a plaintext modulus, an upper limit of noise distribution, a decimal place corresponding to computational precision, a ciphertext-based computation vector dimension n, a homomorphic encryption algorithm identifier, and a homomorphic computation function identifier.

According to a second aspect, a homomorphic encryption-based communication method is provided. The method may be performed by a second network device, or may be performed by a component (for example, a chip or a circuit) of a second network device. This is not limited. For ease of description, the following uses an example in which the method is performed by the second network device for description. The method may include: The second network device receives a homomorphic key and information about a homomorphic task of a terminal device from a first network device or a homomorphic management device HECF, where the homomorphic key is used to execute the homomorphic task; and the second network device executes the homomorphic task based on the homomorphic key and the information about the homomorphic task, where the first network device is a network device accessed by the terminal device before handover, and the second network device is a network device accessed by the terminal device after handover.

In the foregoing solution, when a homomorphic computation party of the homomorphic task corresponding to the terminal device changes because a relative location of the terminal device and the network device changes, a new homomorphic computation party (the second network device) can obtain related information of the homomorphic task, for example, the homomorphic key and a homomorphic task requirement, from an old homomorphic computation party (the first network device) or the HECF having a homomorphic management capability, to complete the homomorphic task, thereby ensuring continuity of the homomorphic task in which the terminal device participates.

In a possible implementation, before the second network device receives the homomorphic key and the information about the homomorphic task of the terminal device from the homomorphic management device HECF, the method further includes: The second network device receives a homomorphic task requirement from the first network device, where the homomorphic task requirement indicates a parameter required for executing the homomorphic task; and the second network device sends the homomorphic task requirement and homomorphic capability information of the second network device to the homomorphic management device HECF, where a homomorphic computation key is determined based on the homomorphic task requirement and the homomorphic capability information of the second network device.

In the foregoing solution, when a new homomorphic computation party receives only a homomorphic task requirement from an old homomorphic computation party, the new homomorphic computation party can forward the homomorphic task requirement to the HECF, so that the HECF determines a corresponding homomorphic key and corresponding information about the homomorphic task based on the homomorphic task requirement, and sends the homomorphic key and the information about the homomorphic task to the new homomorphic computation party. In this way, the homomorphic task is managed in a unified manner by the HECF, so that the HECF can obtain change statuses of all homomorphic tasks in an associated management area in a timely manner, update and manage homomorphic keys, information about the homomorphic tasks, and homomorphic capability information of different nodes that are related to all the homomorphic tasks, and perform proper scheduling and orchestration based on valid compute resources, storage resources, and homomorphic task requirements of the different nodes.

In a possible implementation, the second network device is a target base station, the first network device is a source base station, and the homomorphic computation key and the information about the homomorphic task are sent through an Xn interface.

In a possible implementation, before the second network device receives the homomorphic key and the information about the homomorphic task from the first network device or the homomorphic management device HECF, the method further includes: The second network device receives handover request information from the first network device, where the handover request information indicates to switch the network device accessed by the terminal device; and the second network device sends handover response information to the first network device, where the handover response information indicates that the network device accessed by the terminal device is capable of switching to the second network device.

In the foregoing solution, when a homomorphic computation party of the homomorphic task changes because the network device accessed by the terminal device switches, a new homomorphic computation party (the second network device) can obtain related information of the homomorphic task, for example, the homomorphic key and the homomorphic task requirement, from an old homomorphic computation party (the first network device) or the HECF having a homomorphic management capability, to complete the homomorphic task.

In a possible implementation, the handover request information includes the homomorphic task requirement, and that the second network device sends the handover response information to the first network device includes: When the second network device determines that the homomorphic task requirement is met, the second network device sends the handover response information to the first network device.

In a possible implementation, before the second network device receives the homomorphic key and the information about the homomorphic task from the first network device or the homomorphic management device HECF, the method further includes: The second network device receives radio resource control RRC wakeup request information from the terminal device, where the RRC wakeup request information is used to request to switch the terminal device from a non-connected state to a connected state; and the second network device sends terminal device context obtaining request information to the first network device; and that the second network device receives the homomorphic key and the information about the homomorphic task from the first network device or the homomorphic management device HECF includes: The second network device receives terminal device context obtaining response information from the first network device, where the terminal device context obtaining response information includes the homomorphic key and the information about the homomorphic task.

In the foregoing solution, when a homomorphic computation party of the homomorphic task changes because a connection status of the terminal device changes, a new homomorphic computation party (the second network device) can obtain related information of the homomorphic task, for example, the homomorphic computation key and the homomorphic task requirement, from an old homomorphic computation party (the first network device) or the HECF having a homomorphic management capability, to complete the homomorphic task.

In a possible implementation, after the second network device receives the homomorphic key and the information about the homomorphic task from the first network device or the homomorphic management device HECF, the method further includes: The second network device sends RRC wakeup information to the terminal device, where the RRC wakeup information indicates to switch the terminal device from the non-connected state to the connected state.

In a possible implementation, that the second network device sends the RRC wakeup information to the terminal device includes: When the second network device determines that a cell served by the second network device meets the homomorphic task requirement, the second network device sends the RRC wakeup information to the terminal device.

In a possible implementation, the second network device is a second core network element, the first network device is a first core network element, the first core network element is a network device serving a cell of the terminal device before handover, the second core network element is a network device serving a cell of the terminal device after handover, and the homomorphic key and the information about the homomorphic task are sent through an Ng interface.

In a possible implementation, the homomorphic capability information includes at least one of the following: a homomorphic capability type, an identifier of a homomorphic encryption and decryption algorithm, a homomorphic computation function identifier, a security level, a decryption circuit depth, and complexity of a ciphertext-based computation circuit.

In a possible implementation, the information about the homomorphic task includes at least one of the following: a homomorphic task role, a homomorphic computation key, a homomorphic computation key size, a ciphertext modulus, a plaintext modulus, an upper limit of noise distribution, a decimal place corresponding to computational precision, a ciphertext-based computation vector dimension n, a homomorphic encryption algorithm identifier, and a homomorphic computation function identifier.

According to a third aspect, a homomorphic encryption-based communication method is provided. The method may be performed by a homomorphic management device HECF, or may be performed by a component (for example, a chip or a circuit) of an HECF. This is not limited. For ease of description, the following uses an example in which the method is performed by the HECF for description. The method may include: The homomorphic management device HECF determines a homomorphic key based on a homomorphic task requirement and homomorphic capability information of a second network device, where the homomorphic key is used to execute a homomorphic task ofa terminal device, and the homomorphic task requirement indicates a parameter required for executing the homomorphic task; and the homomorphic management device HECF sends the homomorphic key and information about the homomorphic task to the second network device, where the second network device is a network device accessed by the terminal device after handover.

In the foregoing solution, when a homomorphic computation party of the homomorphic task corresponding to the terminal device changes because a relative location of the terminal device and the network device changes, the HECF having a homomorphic management capability can re-derive or locally search for a homomorphic key used for the homomorphic task based on the homomorphic task requirement and a homomorphic capability of a new homomorphic computation party, and send the homomorphic key to the new homomorphic computation party, to complete the homomorphic task, thereby ensuring continuity of the homomorphic task in which the terminal device participates.

In a possible implementation, the method further includes: The homomorphic management device HECF receives the homomorphic task requirement and the homomorphic capability information of the second network device from the second network device.

In a possible implementation, before the HECF determines the homomorphic key based on the homomorphic task requirement and the homomorphic capability information of the second network device, the method further includes: The HECF receives indication information from the second network device, where the indication information indicates that a network device accessed by the terminal device switches.

In the foregoing solution, when a homomorphic computation party of the homomorphic task changes because the network device accessed by the terminal device switches, the HECF can send the homomorphic key to a new homomorphic computation party based on indication information sent by the terminal device, to ensure continuity of the homomorphic task.

According to a fourth aspect, a homomorphic encryption-based communication method is provided. The method may be performed by a first network device, or may be performed by a component (for example, a chip or a circuit) of a first network device. This is not limited. For ease of description, the following uses an example in which the method is performed by the first network device for description. The method may include: The first network device receives first information from a second network device, where the first information indicates that the second network device meets a homomorphic task requirement, and the homomorphic task requirement indicates a parameter required for executing a homomorphic task of a terminal device; and the first network device sends a homomorphic key and information about the homomorphic task to the second network device, where the homomorphic key and the information about the homomorphic task are used to execute the homomorphic task, where the first network device is a network device accessed by the terminal device before handover, and the second network device is a network device accessed by the terminal device after handover.

In the foregoing solution, when a homomorphic computation party of the homomorphic task corresponding to the terminal device changes because a relative location of the terminal device and the network device changes, when determining that a homomorphic capability of a new homomorphic computation party meets the homomorphic task requirement, an old homomorphic computation party sends the homomorphic key used for the homomorphic task to the new homomorphic computation party, to complete the homomorphic task, thereby ensuring continuity of the homomorphic task in which the terminal device participates.

In a possible implementation, the second network device is a target base station, the first network device is a source base station, and a homomorphic computation key and the information about the homomorphic task are sent through an Xn interface.

In a possible implementation, before the first network device sends the homomorphic key and the information about the homomorphic task to the second network device, the method further includes: The first network device determines that the network device accessed by the terminal device is to switch; the first network device sends handover request information to the second network device, where the handover request information indicates to switch the network device accessed by the terminal device; the first network device receives handover response information from the second network device, where the handover response information indicates that the network device accessed by the terminal device is capable of switching to the second network device; and the first network device sends a handover command to the terminal device, where the handover command indicates to switch the network device accessed by the terminal device to the second network device.

In the foregoing solution, when a homomorphic computation party of the homomorphic task changes because the network device accessed by the terminal device switches, an old homomorphic computation party (the first network device) sends related information of the homomorphic task, for example, the homomorphic key and the homomorphic task requirement to a new homomorphic computation party (the second network device), to complete the homomorphic task.

In a possible implementation, before the first network device sends the homomorphic key and the information about the homomorphic task to the second network device, the method further includes: The first network device sends terminal device context obtaining request information to the second network device; and that the first network device sends the homomorphic key and the information about the homomorphic task to the second network device includes: The first network device sends terminal device context obtaining response information to the second network device, where the terminal device context obtaining response information includes the homomorphic key and the information about the homomorphic task.

In the foregoing solution, when a homomorphic computation party of the homomorphic task changes because a connection status of the terminal device changes, an old homomorphic computation party (the first network device) sends the terminal device context obtaining response information including related information of the homomorphic task, for example, the homomorphic computation key and the homomorphic task requirement, to a new homomorphic computation party (the second network device), to ensure continuity of the homomorphic task.

In a possible implementation, the second network device is a second core network element, the first network device is a first core network element, the first core network element is a network device serving a cell of the terminal device before handover, the second core network element is a network device serving a cell of the terminal device after handover, and the homomorphic computation key and the information about the homomorphic task are sent through an Ng interface.

According to a fifth aspect, a communication apparatus is provided, including a unit configured to perform the method shown in the first aspect. The communication apparatus may be a key generation party, or may be a chip or a circuit disposed in a key generation party. This is not limited in this application. The communication apparatus includes: a processing unit, configured to obtain a first key parameter, where the first key parameter is a key parameter of an updated root key of a network device accessed by a terminal device. The processing unit is further configured to derive a homomorphic encryption and decryption key based on the first key parameter using a homomorphic encryption and decryption algorithm, where the homomorphic encryption and decryption key is used for a homomorphic task in which the terminal device participates.

In a possible implementation, when the communication apparatus is a first network device, a transceiver unit is configured to receive the first key parameter from a second network device, where the second network device is a network device accessed by the terminal device before handover, and the communication apparatus is a network device accessed by the terminal device after handover; or the processing unit is further configured to generate the first key parameter, where the communication apparatus is the network device accessed by the terminal device.

In a possible implementation, the apparatus further includes: the transceiver unit, further configured to receive homomorphic capability information of the terminal device; and the processing unit, further configured to determine the homomorphic encryption and decryption algorithm based on the homomorphic capability information of the terminal device.

In a possible implementation, the transceiver unit is further configured to receive homomorphic capability information of a third network device; and the processing unit is further configured to determine the homomorphic encryption and decryption algorithm based on the homomorphic capability information of the third network device and the homomorphic capability information of the terminal device, where the third network device is a device participating in executing the homomorphic task.

In a possible implementation, the apparatus further includes the transceiver unit, further configured to send first indication information to the terminal device, where the first indication information indicates an identifier of the homomorphic encryption and decryption algorithm.

In a possible implementation, the apparatus further includes the transceiver unit, further configured to receive an identifier of the homomorphic encryption and decryption algorithm from a homomorphic management device HECF.

In a possible implementation, when the key generation party is a homomorphic management device HECF, the processing unit is further configured to generate the first key parameter.

In a possible implementation, the apparatus further includes the transceiver unit, further configured to receive homomorphic capability information of the terminal device; and the processing unit, further configured to determine the homomorphic encryption and decryption algorithm based on the homomorphic capability information of the terminal device.

In a possible implementation, the transceiver unit is further configured to receive homomorphic capability information of a third network device; and the processing unit is further configured to determine the homomorphic encryption and decryption algorithm based on the homomorphic capability information of the third network device and the homomorphic capability information of the terminal device, where the third network device is a device participating in executing the homomorphic task.

In a possible implementation, the apparatus further includes the transceiver unit, further configured to send the homomorphic encryption and decryption key to a first network device and the terminal device, where the first network device is the network device accessed by the terminal device.

In a possible implementation, when the key generation party is a terminal device, the transceiver unit is further configured to receive second indication information from a first network device, where the second indication information indicates that a root key of a network device accessed by the terminal device is updated, and the first network device is the network device accessed by the terminal device; and the processing unit is further configured to generate the first key parameter based on the second indication information.

In a possible implementation, the apparatus further includes the transceiver unit, further configured to receive first indication information from the first network device or an HECF, where the first indication information indicates an identifier of the homomorphic encryption and decryption algorithm.

In a possible implementation, the apparatus further includes the processing unit, further configured to learn of a homomorphic task requirement, where the homomorphic task requirement indicates a parameter required for executing the homomorphic task; and when the communication apparatus determines that the third network device meets the homomorphic task requirement, the processing unit is further configured to derive the homomorphic encryption and decryption key based on the first key parameter, the homomorphic encryption and decryption algorithm, and the homomorphic task requirement, where the third network device is the device participating in executing the homomorphic task.

In a possible implementation, the processing unit is further configured to derive the homomorphic encryption and decryption key based on the first key parameter, the homomorphic encryption and decryption algorithm, and a second key parameter, where the second key parameter includes at least one of the following: the identifier of the homomorphic encryption and decryption algorithm, a ciphertext modulus, a plaintext modulus, and a polynomial dimension.

For explanations and beneficial effect of related content of the communication apparatus provided in the fifth aspect, refer to the method shown in the first aspect. Details are not described herein again.

According to a sixth aspect, a communication apparatus is provided, including a unit configured to perform the method shown in the second aspect. The communication apparatus may be a second network device, or may be a chip or a circuit disposed in a second network device. This is not limited in this application. The communication apparatus includes: a transceiver unit, configured to receive a homomorphic key and information about a homomorphic task of a terminal device from a first network device or a homomorphic management device HECF, where the homomorphic key is used to execute the homomorphic task; and a processing unit, configured to execute the homomorphic task based on the homomorphic key and the information about the homomorphic task, where the first network device is a network device accessed by the terminal device before handover, and the communication apparatus is a network device accessed by the terminal device after handover.

In a possible implementation, the transceiver unit is further configured to receive a homomorphic task requirement from the first network device, where the homomorphic task requirement indicates a parameter required for executing the homomorphic task; and the transceiver unit is further configured to send the homomorphic task requirement and homomorphic capability information of the second network device to the homomorphic management device HECF, where a homomorphic computation key is determined based on the homomorphic task requirement and the homomorphic capability information of the second network device.

In a possible implementation, the second network device is a target base station, the first network device is a source base station, and the homomorphic computation key and the information about the homomorphic task are sent through an Xn interface.

In a possible implementation, the transceiver unit is further configured to receive handover request information from the first network device, where the handover request information indicates to switch the network device accessed by the terminal device; and the transceiver unit is further configured to send handover response information to the first network device, where the handover response information indicates that the network device accessed by the terminal device is capable of switching to the communication apparatus.

In a possible implementation, the handover request information includes the homomorphic task requirement, and when the communication apparatus determines that the homomorphic task requirement is met, the transceiver unit is further configured to send the handover response information to the first network device.

In a possible implementation, the transceiver unit is further configured to receive radio resource control RRC wakeup request information from the terminal device, where the RRC wakeup request information is used to request to switch the terminal device from a non-connected state to a connected state; the transceiver unit is further configured to send terminal device context obtaining request information to the first network device; and the transceiver unit is further configured to receive terminal device context obtaining response information from the first network device, where the terminal device context obtaining response information includes the homomorphic key and the information about the homomorphic task.

In a possible implementation, the transceiver unit is further configured to send RRC wakeup information to the terminal device, where the RRC wakeup information indicates to switch the terminal device from the non-connected state to the connected state.

In a possible implementation, when the communication apparatus determines that a cell served by the communication apparatus meets the homomorphic task requirement, the transceiver unit is further configured to send the RRC wakeup information to the terminal device.

In a possible implementation, the second network device is a second core network element, the first network device is a first core network element, the first core network element is a network device serving a cell of the terminal device before handover, the second core network element is a network device serving a cell of the terminal device after handover, and the homomorphic key and the information about the homomorphic task are sent through an Ng interface.

In a possible implementation, the homomorphic capability information includes at least one of the following: a homomorphic capability type, an identifier of a homomorphic encryption and decryption algorithm, a homomorphic computation function identifier, a security level, a decryption circuit depth, and complexity of a ciphertext-based computation circuit.

In a possible implementation, the information about the homomorphic task includes at least one of the following: a homomorphic task role, a homomorphic computation key, a homomorphic computation key size, a ciphertext modulus, a plaintext modulus, an upper limit of noise distribution, a decimal place corresponding to computational precision, a ciphertext-based computation vector dimension n, a homomorphic encryption algorithm identifier, and a homomorphic computation function identifier.

For explanations and beneficial effect of related content of the communication apparatus provided in the sixth aspect, refer to the method shown in the second aspect. Details are not described herein again.

According to a seventh aspect, a communication apparatus is provided, including a unit configured to perform the method shown in the third aspect. The communication apparatus may be an HECF, or may be a chip or a circuit disposed in an HECF. This is not limited in this application.

The communication apparatus includes:

a processing unit, configured to determine a homomorphic key based on a homomorphic task requirement and homomorphic capability information of a second network device, where the homomorphic key is used to execute a homomorphic task of a terminal device, and the homomorphic task requirement indicates a parameter required for executing the homomorphic task; and a transceiver unit, configured to send the homomorphic key and information about the homomorphic task to the second network device, where the second network device is a network device accessed by the terminal device after handover.

In a possible implementation, the transceiver unit is further configured to receive the homomorphic task requirement and the homomorphic capability information of the second network device from the second network device.

In a possible implementation, the transceiver unit is further configured to receive indication information from the second network device, where the indication information indicates that a network device accessed by the terminal device switches.

For explanations and beneficial effect of related content of the communication apparatus provided in the seventh aspect, refer to the method shown in the third aspect. Details are not described herein again.

According to an eighth aspect, a communication apparatus is provided, including a unit configured to perform the method shown in the fourth aspect. The communication apparatus may be a first network device, or may be a chip or a circuit disposed in a first network device. This is not limited in this application. The communication apparatus includes: a transceiver unit, configured to receive first information from a second network device, where the first information indicates that the second network device meets a homomorphic task requirement, and the homomorphic task requirement indicates a parameter required for executing a homomorphic task of a terminal device. The transceiver unit is further configured to send a homomorphic key and information about the homomorphic task to the second network device, where the homomorphic key and the information about the homomorphic task are used to execute the homomorphic task. The communication apparatus is a network device accessed by the terminal device before handover, and the second network device is a network device accessed by the terminal device after handover.

In a possible implementation, the second network device is a target base station, the communication apparatus is a source base station, and a homomorphic computation key and the information about the homomorphic task are sent through an Xn interface.

In a possible implementation, a processing unit is configured to determine that the network device accessed by the terminal device is to switch; the transceiver unit is further configured to send handover request information to the second network device, where the handover request information indicates to switch the network device accessed by the terminal device; the transceiver unit is further configured to receive handover response information from the second network device, where the handover response information indicates that the network device accessed by the terminal device is capable of switching to the second network device; and the transceiver unit is further configured to send a handover command to the terminal device, where the handover command indicates to switch the network device accessed by the terminal device to the second network device.

In a possible implementation, the transceiver unit is further configured to send terminal device context obtaining request information to the second network device; and the transceiver unit is further configured to send terminal device context obtaining response information to the second network device, where the terminal device context obtaining response information includes the homomorphic key and the information about the homomorphic task.

In a possible implementation, the second network device is a second core network element, the communication apparatus is a first core network element, the first core network element is a network device serving a cell of the terminal device before handover, the second core network element is a network device serving a cell of the terminal device after handover, and the homomorphic computation key and the information about the homomorphic task are sent through an Ng interface.

For explanations and beneficial effect of related content of the communication apparatus provided in the ninth aspect, refer to the method shown in the fourth aspect. Details are not described herein again.

According to a tenth aspect, a communication system is provided. The system includes a second network device, a homomorphic management device, and a first network device. The second network device is configured to perform the method in any possible implementation of the second aspect, the homomorphic management device is configured to perform the method in any possible implementation of the third aspect, and the first network device is configured to perform the method in any possible implementation of the third aspect.

According to an eleventh aspect, a communication apparatus is provided. The apparatus includes at least one processor, and the processor is configured to execute a computer program or instructions, and/or cause, using a logic circuit, the apparatus to perform the method in any one of the possible implementations of the first aspect to the fourth aspect.

In an implementation, the apparatus is a key generation party.

In an implementation, the apparatus is a chip, a chip system, or a circuit used for a key generation party.

In an implementation, the apparatus further includes a memory, configured to store the computer program or the instructions. Optionally, the memory is integrated with the processor.

In an implementation, the apparatus further includes a communication interface, configured to input and/or output a signal. Optionally, the communication interface may be an input/output interface, a transceiver, a transmitter, a receiver, or the like. Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a twelfth aspect, a computer-readable storage medium is provided. The computer-readable medium stores program code executed by a device, and the program code includes the method in any one of the possible implementations of the first aspect to the fourth aspect.

According to a thirteenth aspect, a computer program product including instructions is provided. When the computer program product runs on a computer, the computer is caused to perform the method in any one of the possible implementations of the first aspect to the fourth aspect.

## BRIEF DESCRIPTION OF DRAWINGS

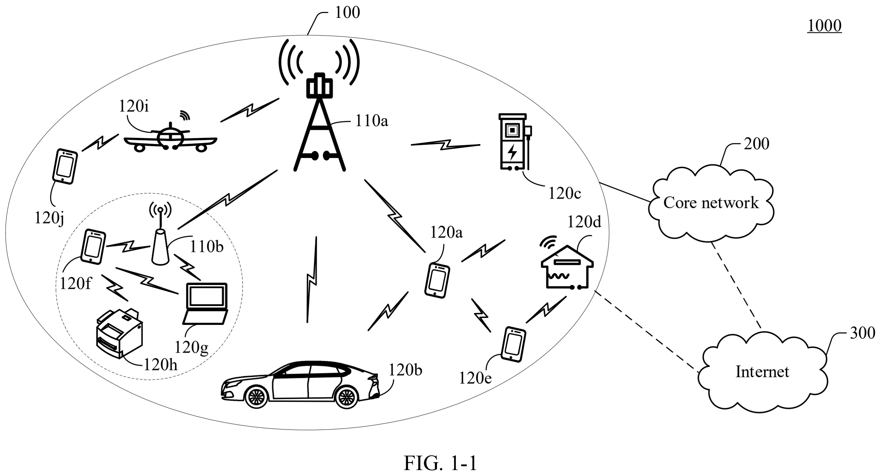

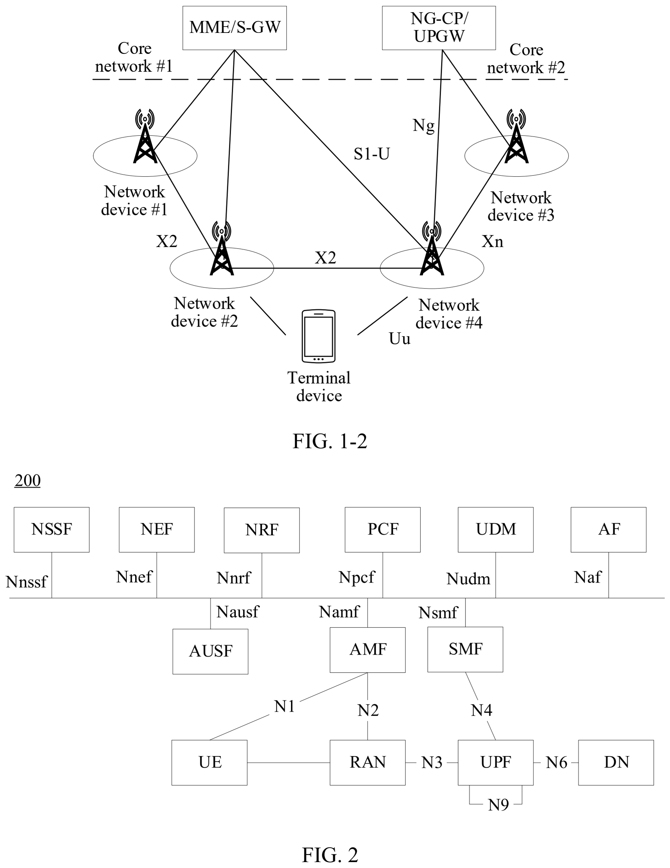

FIG. 1-1 is diagram of a network architecture applicable to an embodiment of this application;
FIG. 1-2 is a diagram of another network architecture applicable to an embodiment of this application;
FIG. 2 is a diagram of another network architecture applicable to an embodiment of this application;
FIG. 3 is a diagram of a key architecture applicable to an embodiment of this application;
FIG. 4 is a schematic flowchart of a homomorphic encryption-based communication method 400 according to an embodiment of this application;
FIG. 5A and FIG. 5B are a schematic flowchart of a homomorphic encryption-based communication method 500 according to an embodiment of this application;
FIG. 6A and FIG. 6B are a schematic flowchart of a homomorphic encryption-based communication method 600 according to an embodiment of this application;

FIG. 7 is a schematic flowchart of a homomorphic encryption-based communication method 700 according to an embodiment of this application;

FIG. 8 is a schematic flowchart of a homomorphic encryption-based communication method 800 according to an embodiment of this application;

FIG. 9 is a schematic flowchart of a homomorphic encryption-based communication method 900 according to an embodiment of this application;

FIG. 10 is a schematic flowchart of a homomorphic encryption-based communication method 1000 according to an embodiment of this application;

FIG. 11 is a block diagram of a communication apparatus 1100 according to an embodiment of this application;

FIG. 12 is a block diagram of another communication apparatus 1200 according to an embodiment of this application; and

FIG. 13 is a diagram of a chip system 1300 according to an embodiment of this application.

## DESCRIPTION OF EMBODIMENTS

The following describes technical solutions of this application with reference to accompanying drawings.

The technical solutions provided in this application may be applied to various communication systems, for example, a 4th generation (4th generation, 4G) system, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a sixth generation mobile communication system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A homomorphic encryption-based communication method provided in embodiments of this application may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or may be applied to various communication systems evolved after 5G, for example, a 6th generation (6th generation, 6G) communication system. The method provided in embodiments of this application may be further applied to a Bluetooth system, a wireless fidelity (wireless Wi-Fi) system, a long range (long range, LoRa) internet of things system, or an internet of vehicles system. The method provided in embodiments of this application may be further applied to a satellite communication system. The satellite communication system may be integrated with the foregoing communication system.

For ease of understanding of embodiments of this application, an application scenario used in this application is described by using an architecture of a communication system shown in FIG. 1-1 and FIG. 1-2 as an example.

FIG. 1-1 is a diagram of a possible and non-limiting system. As shown in FIG. 1-1, a communication system 1000 includes a radio access network (radio access network, RAN) 100 and a core network (core network, CN) 200. The RAN 100 includes at least one network device (for example, 110a and 110b in FIG. 1-1, which are collectively referred to as 110) and at least one terminal (for example, 120a to 120j in FIG. 1-1, which are collectively referred to as 120). The RAN 100 may further include another RAN node, for example, a wireless relay device and/or a wireless backhaul device (not shown in FIG. 1-1). The terminal 120 is connected to the network device 110 in a wireless manner. The network device 110 is connected to the core network 200 in a wireless or wired manner. A core network device in the core network 200 and the network device 110 in the RAN 100 may respectively be different physical devices, or may be a same physical device that integrates a logical function of the core network and a logical function of the radio access network.

The RAN 100 may be a 3rd generation partnership project (3rd generation partnership project, 3GPP)-related cellular system, for example, a 4G mobile communication system, a 5G mobile communication system, or a system evolving after 5G (for example, a 6G mobile communication system). The RAN 100 may alternatively be an open access network (open RAN, O-RAN or ORAN), a cloud radio access network (cloud radio access network, CRAN), or a Wi-Fi system. The RAN 100 may alternatively be a communication system that integrates two or more of the foregoing systems.

An apparatus provided in embodiments of this application may be used in the network device 110 or the terminal 120. It may be understood that FIG. 1-1 shows only a possible architecture of the communication system to which embodiments of this application may be applied. In another possible scenario, the architecture of the communication system may alternatively include another device.

The network device 110 is a node in a radio access network (radio access network, RAN), and may also be referred to as an access network device or a RAN node (or device). The network device 110 is configured to assist the terminal in implementing radio access. A plurality of network devices 110 in the communication system 1000 may be nodes of a same type, or may be nodes of different types. In some scenarios, roles of the network device 110 and the terminal 120 are relative. For example, a network element 120i in FIG. 1-1 may be a helicopter or an uncrewed aerial vehicle, and may be configured as a mobile base station. For a terminal 120j that accesses the RAN 100 through the network element 120i, the network element 120i is a base station. However, for the base station 110a, the network element 120i is a terminal. The network device 110 and the terminal 120 are sometimes referred to as communication apparatuses. For example, the network elements 110a and 110b in FIG. 1-1 may be understood as communication apparatuses having a base station function, and the network elements 120a to 120j may be understood as communication apparatuses having a terminal function.

In a possible scenario, the network device may be a base station (base station), an evolved NodeB (evolved NodeB, eNodeB), a transmission reception point (transmission reception point, TRP), a transmission point (transmission point, TP), a next generation NodeB (next generation NodeB, gNB), a next generation base station in a 6th generation (6th generation, 6G) mobile communication system, a base station in a future mobile communication system, a satellite, an access point (access point, AP) in a Wi-Fi system, an integrated access and backhaul (integrated access and backhaul, IAB) node, or a network device that is in a non-terrestrial network (non-terrestrial network, NTN) communication system of a mobile switching center and that may be deployed on a high-altitude platform or a satellite, or the like. The network device may be a macro base station (for example, 110a in FIG. 1-1), a micro base station or an indoor station (for example, 110b in FIG. 1-1), a relay node or a donor node, or a radio controller in a CRAN scenario. The network device may alternatively be a device having a base station function in device to device (device to device, D2D) communication, internet of vehicles communication, uncrewed aerial vehicle communication, or machine communication. Optionally, the network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of network devices collaborate to assist the terminal in implementing radio access, and different network devices respectively implement some functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form of the network device is not limited in embodiments of this application. An apparatus configured to implement a function of the network device may be a network device, or may be an apparatus, for example, a chip system, that can support the network device in implementing the function. The apparatus may be mounted in the network device or used in conjunction with the network device.

The terminal device 120 may also be referred to as user equipment (user equipment, UE), a mobile station (mobile station, MS), a mobile terminal (mobile terminal, MT), or the like, or is a device that is configured to provide voice or data connectivity for a user, or may be an internet of things device. For example, the terminal device includes a handheld device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smartwatch, a smart band, or a pedometer), a vehicle-mounted device (for example, a vehicle, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device that functions as a terminal in D2D communication.

A device form of the terminal is not limited in embodiments of this application. An apparatus configured to implement a function of the terminal device may be a terminal device, or may be an apparatus, for example, a chip system, that can support the terminal device in implementing the function. The apparatus may be mounted in a terminal device or used in conjunction with a terminal device. In embodiments of this application, the chip system may include a chip, or may include a chip and another discrete component.

FIG. 1-2 is a diagram of a system architecture, and more specifically, is a diagram of a wireless communication system and an access network.

As shown in FIG. 1-2, the wireless communication system includes a core network (for example, a core network #1 and a core network #2 in FIG. 1-2), a network device (for example, a network device #1, a network device #2, a network device #3, and a network device #4 in FIG. 1-2), a terminal device, and the like. A mobility management entity (mobility management entity, MME)/serving gateway (serving gateway, S-GW) may be connected to the network device.

For example, the core network #1 may be a 4G evolved packet core (evolved packet core, EPC) network, and the network device #1 and the network device #2 may be 4G base stations (for example, an evolved NodeB (evolved NodeB, eNB or eNodeB)) in an LTE system. The core network #2 may be a 5G core network (the 5th generation core network, 5GC), and the network device #3 and the network device #4 may be 5G base stations (for example, a next generation node base station (next generation Node Base station, gNB)). A next generation control plane (next generation control plane, NG-CP)/user plane gateway (user plane gateway, UPGW) is connected to the gNB through an Ng interface. eNBs are connected to each other through an X2 interface, the eNB is connected to the gNB through an X2 interface, gNBs are connected to each other through an Xn interface, and the gNB is connected to UE through a Uu interface. For example, the core network #1 may alternatively be a 5G core network, and the network device #1 and the network device #2 may be 5G base stations. The core network #2 may alternatively be a 6G core network, and the network device #3 and the network device #4 may be 6G base stations. This is not limited in this application.

The base station may include a macro base station (a high-power cellular base station) and/or a micro base station (a low-power cellular base station). The macro base station includes a macro cell (macro cell), and the micro base station includes a micro cell (micro cell), a pico cell (pico cell), and a femto cell (femto cell). The base station may alternatively be referred to as an xNB, a gNB, a NodeB, an evolved NodeB (evolved NodeB, eNB), an access point, a base station transceiver, a radio base station, a radio transceiver, a transceiver functional entity, a basic service set (basic service set, BSS), an extended service set (extend service set, ESS), a transmission reception point (transmission reception point, TRP), or the like. This is not limited in this application.

The UE mainly accesses a 5G network through a radio air interface and obtains a service. The UE interacts with a radio access network (radio access network, RAN) device through the air interface, and interacts with an access and mobility management function (access and mobility management function, AMF) network element of a core network via non-access stratum (non-access stratum, NAS) signaling.

The 4G base station eNB may be connected to the 4G core network over a backhaul network (an S1 interface). The 5G base station gNB may be connected to the 5G core network 5GC over a backhaul network (an Ng interface), or to an LTE EPC through an S1 interface. The base station may perform one or more of the following functions: transmission of user data and control signaling, encryption and decryption of user data or air interface signaling, integrity protection, header compression, a mobility control function (for example, handover and dual connectivity), inter-cell interference coordination, connection establishment and release, load balancing, distribution of non-access stratum (NAS) messages, NAS node selection, synchronization, paging, positioning and transferring of warning information, radio access network (RAN) sharing, a multimedia broadcast multicast service (multimedia broadcast multicast service, MBMS), user and device tracing, RAN information management, and the like. A plurality of base stations may directly or indirectly communicate with each other over the backhaul network (an X2 or Xn interface). The base station may perform wireless communication with the UE. The base station provides an access point to the EPC or the 5GC for the terminal UE. Each base station may provide a communication service for a terminal user in a corresponding geographical coverage area.

For example, FIG. 2 is a diagram of a network architecture. With reference to FIG. 2, the following describes a network architecture applicable to this application by using a network architecture including a 5G core network, an access network, and a data network (data network, DN) as an example.

As shown in FIG. 2, the 5G core network may include a user plane function (user plane function, UPF) network element, an authentication server function (authentication server function, AUSF) network element, an access and mobility management function (access and mobility management function, AMF) network element, a session management function (session management function, SMF) network element, a network exposure function (network exposure function, NEF) network element, a network repository function (network repository function, NRF) network element, a policy control function (policy control function, PCF) network element, a network slice selection function (Network Slice Selection Function, NSSF) network element, a unified data management (unified data management, UDM) network element, and an application function (application function, AF) network element.

The UPF mainly provides user plane functions such as user packet forwarding and processing, connecting to a DN, session anchoring, and quality of service (quality of service, QoS) policy enforcement. For example, the UPF may receive user plane data from the DN, and send the user plane data to a terminal device via a RAN device. The UPF may alternatively receive user plane data from a terminal device via a RAN device, and forward the user plane data to the DN. It should be understood that, if a location of the UE moves when the UE performs a service, to ensure service continuity, the UPF remains unchanged. The AUSF is mainly used for user authentication and the like. The AMF is mainly used for functions such as access control, mobility management, and attachment and detachment. The UDM is mainly used for subscription data management of the UE, including storage and management of a UE identifier, access authorization of the UE, and the like.

In the network architecture shown in FIG. 2, the network elements may communicate with each other through interfaces shown in the figure, and a part of interfaces may be implemented in a manner of service-based interfaces. As shown in FIG. 2, the SMF and the UPF may communicate with each other through an N4 interface. The UPF and the DN may communicate with each other through an N6 interface. A relationship between another interface and each network element is shown in FIG. 2. For brevity, details are not described one by one herein.

It should be understood that the network architecture shown above is merely an example for description, and the network architecture applicable to embodiments of this application is not limited thereto. Any network architecture that can implement functions of the network elements is applicable to embodiments of this application.

It should be understood that the functions or network elements shown in FIG. 2 may be understood as network elements configured to implement different functions, for example, may be combined into a network slice based on a requirement. These network elements may be independent devices, or may be integrated into a same device to implement different functions, or may be network elements in a hardware device, or may be software functions running on dedicated hardware, or may be instantiated virtualization functions on a platform (for example, a cloud platform). Specific forms of the network elements are not limited in this application.

One or more services may be obtained through division into the network elements or the functions. Further, a service that is independent of a network function may occur. In this application, an instance of the function, an instance of the service included in the function, or an instance of the service that exists independently of the network function may be referred to as a service instance.

In embodiments of this application, the chip system may include a chip, or may include a chip and another discrete component.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

It should be further understood that the names of the interfaces between the network elements in FIG. 2 are merely examples, and the interfaces may have other names in a specific implementation. This is not specifically limited in this application. In addition, names of messages (or signaling) transmitted between the foregoing network elements are merely examples, and do not constitute any limitation on functions of the messages.

For ease of understanding of embodiments of this application, the following briefly describes terms or technologies in this application.

1. Homomorphic encryption (homomorphic encryption)

Homomorphic encryption aims to perform computational processing on data ciphertexts without exposing data plaintext, focusing on privacy-preserving computation. It is a technology that implements data value extraction while providing privacy protection. Homomorphic encryption builds on basic encryption and adds a homomorphic computation function. Homomorphic encryption allows computation to be carried out directly on encrypted ciphertexts, and decrypting the result of the ciphertext computation yields the same outcome as computing on the plaintext. Fully homomorphism may be asymmetric public key encryption or symmetric encryption, provided that the ciphertext has a specific algebraic structure.

Homomorphic participants (or homomorphic enablers (HE Enabler)) that execute a homomorphic task (for example, a homomorphic encryption task) may include a key generation (key generation) party, a homomorphic encryption (homomorphic encryption) party, a homomorphic decryption (homomorphic decryption) party, and a homomorphic computation (homomorphic evaluation) party. The key generation party is configured to generate a homomorphic key (for example, a homomorphic encryption key $K_{enc}$, a homomorphic decryption key $K_{dec}$, and a homomorphic computation key $K_{eval}$), and send the homomorphic encryption key, the homomorphic decryption key, and the homomorphic computation key to the homomorphic encryption party, the homomorphic decryption party, and the homomorphic computation party respectively. The homomorphic encryption party is configured to encrypt a plaintext into a ciphertext based on the homomorphic encryption key. The homomorphic computation party is configured to perform homomorphic computation on the ciphertext based on the homomorphic computation key. The homomorphic decryption party is configured to restore, to the plaintext based on the homomorphic decryption key, a ciphertext obtained through homomorphic computation.

Specifically, a homomorphic (public key) encryption scheme HE=(HE.Keygen, HE.Enc, HE.Dec, HE.Eval) includes four parts of algorithms, as shown in the following (where n represents a security parameter).

(1) Key generation (HE.Keygen): $(pk, evk, sk) \leftarrow HE.\ Keygen(1^n)$. The homomorphic encryption key $K_{enc} = pk$, the homomorphic evaluation key $K_{eval} = evk$, and the homomorphic decryption key $K_{dec} = sk$ are output according to a key generation algorithm.

(2) Homomorphic encryption (HE.Enc): $c \leftarrow HE.\ Enc_{pk}(m)$. The homomorphic encryption key $K_{enc} = pk$ is used to encrypt a single-bit message $m \in \{0,1\}$ into a ciphertext c.

(3) Homomorphic decryption (HE.Dec): $m \leftarrow HE.\ Dec_{sk}(c)$. The homomorphic decryption key $K_{dec} = sk$ is used to decrypt the ciphertext c into the message $m \in \{0,1\}$.

(4) Homomorphic computation (HE.Eval, also referred to as homomorphic evaluation): $c_f \leftarrow HE.\ Eval_{evk}(f, c_1, \cdots, c_l)$. The homomorphic computation key $K_{eval} = evk$ is used to apply a function $f : \{0,1\}^l \rightarrow \{0,1\}$ to $c_1, \cdots, c_l$ and output a ciphertext $c_f$. f represents an arithmetic circuit with addition and multiplication gates on GF(2). Generally, homomorphic computation HE.Eval is decomposed into homomorphic addition $c_{add} \leftarrow HE.Add_{evk}(c_1, c_2)$ and homomorphic multiplication $c_{mult} \leftarrow HE.\ Mult_{evk}(c_1, c_2)$.

After the foregoing homomorphic encryption process, a decrypted ciphertext-based computational result in the entire homomorphic encryption scheme HE=(HE.Keygen, HE.Enc, HE.Dec, HE.Eval) is equivalent to a plaintext-based computational result, as shown in the following:

$$Dec_{K_{dec}}(f(Enc_{K_{enc}}(m_1), Enc_{K_{enc}}(m_2), ..., Enc_{K_{enc}}(m_l))) = f(m_1, ..., m_l).$$

It should be understood that, for one homomorphic task, a plurality of homomorphic encryption parties may encrypt data from different sources; or a plurality of homomorphic computation parties may perform homomorphic computation, or there may be a single-hop or multi-hop homomorphic computation party; or there are a plurality of homomorphic decryption parties that can send decryption results to a plurality of data users. Based on key deployment, the homomorphic decryption party and the data user may be a same entity or different entities. Keys of a plurality of homomorphic participants (for example, keys of homomorphic encryption parties) in one homomorphic task (for example, a homomorphic encryption task) may be the same or may be different. This is not limited in this application.

2. Key architecture

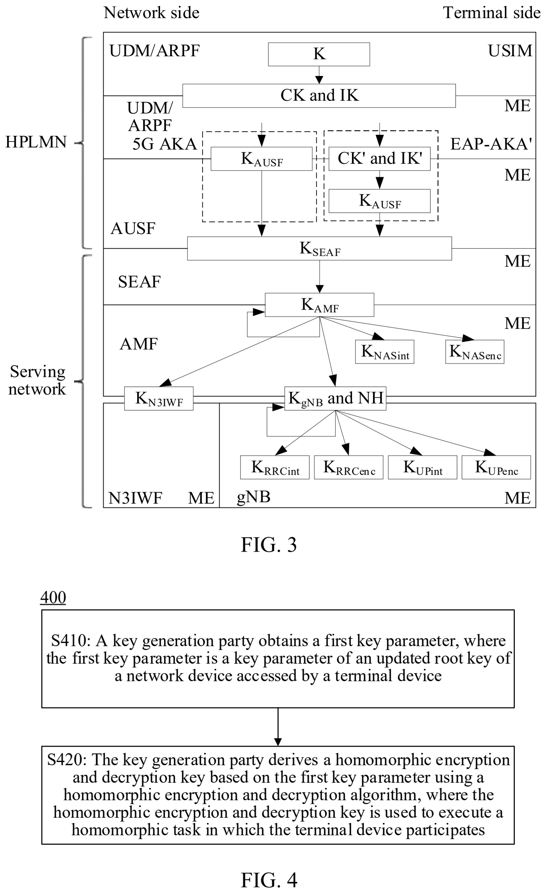

In a 5G system (5G system, 5GS), a 5G authentication and key agreement (5G authentication and key agreement, 5G AKA) protocol is used as an example. A key architecture generated by using a key hierarchy is shown in FIG. 3. Keys related to identity authentication include a K, a CK (cipher Key), and an IK (integrity Key). The key hierarchy includes the following keys in sequence: an AUSF key ($K_{AUSF}$), an anchor key ($K_{SEAF}$), an AMF key ($K_{AMF}$), NAS signaling keys ($K_{NASint}$ and $K_{NASenc}$), a non-3GPP access key ($K_{N3IWF}$), an NG-RAN key ($K_{gNB}$), keys ($K_{UPint}$ and $K_{UPenc}$) transmitted on a user plane UP, and RRC signaling keys ($K_{RRCint}$ and $K_{RRCenc}$).

Specifically, in the 5GS, a security-type network element (or a network element having a root key) includes a UDM, an AMF, an AUSF, an authentication credential repository and processing function (authentication credential repository and processing function, ARPF) network element, and a security anchor function (security anchor function, SEAF) network element. The ARPF is mainly configured to store a root key of a user and authentication-related subscription data, calculate a 5G authentication vector, and the like. The SEAF is mainly configured to derive a lower-layer NAS key and a lower-layer AS key based on the anchor key, and compare authentication results.

The following describes the foregoing keys.

(1) $K_{AUSF}$: $K_{AUSF}$ in a home network (home network) is $K_{AUSF}$ derived from the CK and the IK by mobile equipment (mobile equipment, ME) and the ARPF. $K_{AUSF}$, as a part of a 5G home environment authentication vector (home environment authentication vector, HE AV), is received from the ARPF.

(2) $K_{SEAF}$ is an anchor key derived from $K_{AUSF}$ by the ME and the AUSF. $K_{AUSF}$ is provided by the AUSF for the SEAF in a serving network.

(3) $K_{AMF}$: $K_{AMF}$ in the serving network is a key derived from $K_{SEAF}$ by the ME and the SEAF. When horizontal key derivation is performed, $K_{AMF}$ is further derived by the ME and a source AMF.

(4) NAS signaling keys: $K_{NASint}$ is a key derived from $K_{AMF}$ by the ME and the AMF. The key is used to protect NAS signaling according to a specific integrity algorithm. $K_{NASenc}$ is a key derived from $K_{AMF}$ by the ME and the AMF, and is used to protect NAS signaling according to a specific encryption algorithm.

(5) $K_{N3IWF}$: $K_{N3IWF}$ is a key, used for non-3GPP access, derived from $K_{AMF}$ by the ME and the AMF. $K_{N3IWF}$ is not forwarded between N3IWFs.

(6) $K_{gNB}$: $K_{gNB}$ is a key derived from $K_{AMF}$ by the ME and the AMF. When horizontal or vertical key derivation is performed, $K_{gNB}$ is further derived by the ME and a source gNB.

(7) Keys transmitted on a user plane UP: $K_{UPint}$ is a key derived from $K_{gNB}$ by the ME and the gNB. The key is used to protect user plane data between the ME and the gNB according to a specific integrity algorithm. $K_{UPenc}$ is a key derived from $K_{gNB}$ by the ME and gNB, and is used to protect, according to a specific encryption algorithm, data transmitted on the UP.

(8) RRC signaling keys: $K_{RRCint}$ is a key derived from $K_{gNB}$ by the ME and the gNB. The key is used to protect RRC signaling according to a specific integrity algorithm. $K_{RRCenc}$ is a key derived from $K_{gNB}$ by the ME and the gNB. The key is used to protect RRC signaling according to a specific encryption algorithm.

It should be understood that, when a new key is derived based on a key, a key derivation function (key derivation function, KDF) may be used for derivation. The key derivation function derives one or more keys from a primary key using a pseudo-random function. The key derivation function can be used to extend a key to a longer key or obtain a key in a required format.

It may be understood that, the term "and/or" in this specification merely describes an association relationship between associated objects, and indicates that three relationships may exist. For example, A and/or B may indicate the following cases: Only A exists, both A and B exist, and only B exists. In addition, the character "/" in this specification generally indicates an "or" relationship between the associated objects.

The foregoing describes a network architecture applicable to this application. The following describes in detail a homomorphic encryption-based communication method provided in embodiments of this application with reference to the accompanying drawings. Embodiments provided in this application may be applied to the network architectures shown in FIG. 1 and FIG. 2. This is not limited.

With the progress of the society and the improvement of data ownership awareness, requirements for data privacy protection are increasingly high. To improve data security and privacy, a homomorphic encryption technology can be used to complete computational processing on a data ciphertext without exposing a data plaintext, thereby implementing data value extraction while providing privacy protection. A device, for example, a terminal device, a base station, or a network element, in a wireless communication network (network architectures in FIG. 1 and FIG. 2) may also serve as a homomorphic participant (a homomorphic encryption party, a homomorphic decryption party, a homomorphic computation party, a key generation party, or the like), to participate in a homomorphic task. For example, a terminal, for example, a smart vehicle configured with an on-board unit (on-board unit, OBU), a smartphone, or VR/AR, has a homomorphic encryption capability. When privacy protection is required, generated sensitive data is encrypted and then transmitted to a node, for example, another terminal node, a road side unit (road side unit, RSU), a base station, a core network function (network function, NF), or a cloud provider, in the communication network for homomorphic computation on a ciphertext. Finally, computed ciphertext data is transmitted to a data user for homomorphic decryption and subsequent use.

However, a node, for example, a base station or a core network element, needs to sense in real time a communication resource status, a compute resource status, and the like of the homomorphic participant in the homomorphic task, and performs collaborative control on communication resources and compute resources, to ensure that a homomorphic privacy protection service that meets QoS requirements, for example, an ultra-low delay, high data security and privacy, and sustainability, is provided in a dynamic and complex wireless network environment. When information related to the homomorphic task changes (for example, a homomorphic key changes, or the homomorphic participant changes), the homomorphic task may be interrupted.

This application provides a homomorphic encryption-based communication method, to resolve a problem that a homomorphic task is interrupted because information related to the homomorphic task changes during execution of the homomorphic task, and ensure continuity of the homomorphic task.

Based on the network architectures in FIG. 1 and FIG. 2, the following describes in detail a homomorphic encryption-based communication method 400 provided in this application with reference to FIG. 4.

FIG. 4 is a diagram of a homomorphic encryption-based communication method 400 according to an embodiment of this application. When a root key of a network device (a core network or a base station) accessed by a terminal device is updated, for example, the root key of the network device accessed by the terminal device is updated because a mobility management (mobility management) related procedure is performed on the terminal device (for example, the root key of the network device is updated because the network device accessed by the terminal device switches), or the network device accessed by the terminal device does not switch but the root key of the network device is updated, a homomorphic key needs to be re-derived based on an updated root key, to ensure continuity of a homomorphic task. The following describes the method 400 in detail with reference to FIG. 4.

It should be understood that the mobility management related procedure performed on the terminal may be as follows: In a mobile communication system (for example, a mobile cellular network), a terminal device (or mobile equipment) in an idle state performs cell selection, cell reselection, mobility registration update, and the like; a terminal device in a connected state performs cell handover and the like; and a terminal device in an inactive state performs cell reselection, and the terminal device triggers or periodically triggers RAN-based notification area (RAN-based notification area, RNA) update, state transition, and the like. This is not limited in this application.

S410: A key generation party obtains a first key parameter.

The first key parameter is a key parameter of the updated root key of a network device accessed by the terminal device.

For example, the first key parameter is a root key of a base station or a core network element in a USIM key architecture, and the first key parameter may alternatively be a parameter used to generate the root key of the base station or the core network element in the USIM key architecture.

The key generation party is a device that derives the homomorphic key in the homomorphic task. Specifically, the key generation party may be a core network element, a base station, a homomorphic management unit (homomorphic encryption control function, HECF), a terminal device, or the like. This is not limited in this application.

The HECF can perform key management (for example, derivation and distribution of the homomorphic key, and update and management of the homomorphic key) for the homomorphic task, capability management (for example, generation and storage of a homomorphic capability list) for the homomorphic task, homomorphic task management (for example, homomorphic task request management and homomorphic task scheduling management), and the like. This is not limited in this application.

It should be understood that the root key of the network device accessed by the terminal device is an upper-level key of the homomorphic key in the homomorphic task. In the homomorphic task, when the upper-level key of the homomorphic key is updated, if the homomorphic key is not re-derived, the homomorphic task may be interrupted. Therefore, the homomorphic key needs to be re-derived based on the updated root key (that is, the first key parameter) of a first network device. Further, the method 400 further includes S420.

S420: The key generation party derives a homomorphic encryption and decryption key based on the first key parameter using a homomorphic encryption and decryption algorithm.

The homomorphic encryption and decryption key is used for the homomorphic task in which the terminal device participates, the homomorphic encryption and decryption key includes a homomorphic encryption key and a homomorphic decryption key, and the homomorphic encryption key corresponds to the homomorphic decryption key.

In a possible implementation, the key generation party derives the homomorphic encryption and decryption key based on the first key parameter, the homomorphic encryption and decryption algorithm, and a second key parameter.

The second key parameter and the homomorphic encryption and decryption algorithm are determined based on homomorphic capability information of the terminal device and/or homomorphic capability information of a third network device.

It should be understood that the key generation party needs to determine, based on homomorphic capability information of a homomorphic participant (the terminal device and another device participating in the homomorphic task), the second key parameter and the homomorphic encryption and decryption algorithm that are used to generate the homomorphic encryption and decryption key. In this way, the generated homomorphic encryption and decryption key can be used in the homomorphic task.

The third network device is a device participating in the homomorphic task (or referred to as the homomorphic participant). The third network device may be one or more devices participating in the homomorphic task. This is not limited in this application. In other words, the second key parameter and the homomorphic encryption and decryption algorithm are determined based on a homomorphic capability of one or more devices (the homomorphic participant) participating in the homomorphic task.

Specifically, the homomorphic capability information includes at least one of the following: a homomorphic capability type, an identifier of the homomorphic encryption and decryption algorithm, a homomorphic computation function identifier, a security level $\lambda$, a decryption circuit depth d, and complexity of a ciphertext-based computation circuit.

Specifically, the second key parameter includes at least one of the following: the identifier of the homomorphic encryption and decryption algorithm, a ciphertext modulus, a plaintext modulus, and a polynomial dimension.

The identifier of the homomorphic encryption and decryption algorithm indicates an algorithm for deriving the homomorphic encryption and decryption key.

In a possible implementation, the key generation party learns of a homomorphic task requirement, and when the key generation party determines that the third network device meets the homomorphic task requirement, the key generation party derives the homomorphic encryption and decryption key based on the first key parameter, the homomorphic encryption and decryption algorithm, and the homomorphic task requirement.

It should be understood that the key generation party derives the homomorphic encryption and decryption key only when the device (the third network device) participating in the homomorphic task meets the homomorphic task requirement. This avoids unnecessary key derivation, and can save resources.

The homomorphic task requirement indicates a parameter required for executing the homomorphic task. Specifically, the homomorphic task requirement includes a homomorphic task type, homomorphic task quality, a number of homomorphic encryption parties, a homomorphic encryption party parameter, a number of homomorphic users, and a homomorphic user parameter.

It should be understood that the key generation party may receive a homomorphic task requirement from another homomorphic participant, or when the key generation party is in the homomorphic task, and the root key of the network device accessed by the terminal device is updated, the key generation party knows the homomorphic task requirement. A manner in which the key generation party learns of the homomorphic task requirement is not limited in this application.

Based on the foregoing solution, in the communication system, when the upper-level key of the homomorphic key corresponding to the homomorphic task in which the terminal device participates changes, the key generation party can re-derive, based on an updated upper-level key of the homomorphic encryption and decryption key (the root key of the network device accessed by the terminal device), the homomorphic key used for the homomorphic task, thereby ensuring continuity of the homomorphic task of the terminal device.

In a possible implementation, after deriving the homomorphic encryption and decryption key, the key generation party sends the homomorphic encryption and decryption key to a homomorphic encryption party and a homomorphic decryption party.

In a possible implementation, after the key generation party derives the homomorphic encryption and decryption key, the key generation party derives a homomorphic computation key based on the homomorphic encryption and decryption key, and sends the homomorphic computation key to a homomorphic computation party.

Specifically, in the case of different devices serving as the key generation party, the way of obtaining the first key parameter varies with the key generation party. The following separately describes a specific process in which the key generation party obtains the first key parameter when the key generation party is the first network device, the HECF, or the terminal device.

Case 1: The key generation party is the first network device. The first network device may be a core network element (for example, an AMF), or may be a base station or the like. This is not limited in this application.

In this case, the key generation party may obtain the first key parameter in S410 in the following manner.

In a possible implementation, the first network device receives the first key parameter from a second network device. The second network device is a network device accessed by the terminal device before handover, and the first network device is a network device accessed by the terminal device after handover.

It should be understood that, when the root key of the network device accessed by the terminal device is updated because the network device accessed by the terminal device switches, the network device (the second network device) accessed by the terminal device before handover sends the updated root key to the network device (the first network device) accessed by the terminal device after handover.

For example, when the network device accessed by the terminal device switches from the second network device (for example, a source base station) to the first network device (for example, a target base station), the first network device receives the first key parameter sent by the second network device.

It should be understood that the second network device derives and updates, in the mobility management procedure, the first key parameter corresponding to the first network device. When the network device accessed by the terminal device switches, the second network device sends the first key parameter to the first network device, to derive a new homomorphic key.

In a possible implementation, the first network device generates the first key parameter, and the first network device is the network device accessed by the terminal device.

For example, when the network device accessed by the terminal device does not change but the root key of the network device is updated, the key generation party generates the first key parameter. For example, in a state transition process, for example, a state transition between an RM-deregistered (RM-DEREGISTERED) state and an RM-registered (RM-REGISTERED) state in registration management (registration management, RM), or a transition between a CM-idle (CM-IDLE) state and a CM-connected (CM-CONNECTED) state in connection management (connection management, CM), if there is no complete local 5G NAS security context available in the AMF (in other words, the terminal device sends an unprotected registration request message, or the terminal device protects a registration request message by using a current local 5G security context that is no longer stored in the AMF), primary authentication (primary authentication) running needs to be performed. If there is a complete local 5G NAS security context available in the AMF, the AMF may determine (according to an AMF policy) to run new primary identity authentication and a NAS SMC procedure (in this procedure, a new 5G NAS security context is activated based on $K_{AMF}$ derived during primary identity authentication runtime) after a registration request.

It should be understood that before the homomorphic key is derived (that is, before S420), the homomorphic encryption and decryption algorithm used to derive the homomorphic key needs to be determined.

For Case 1, when the key generation party is the first network device, the first network device may determine the homomorphic encryption and decryption algorithm, or the HECF may determine the homomorphic encryption and decryption algorithm and indicate the homomorphic encryption and decryption algorithm to the first network device.

Specifically, when the first network device determines the homomorphic encryption and decryption algorithm, the method 400 may further include S430 to S432.

S430: The first network device receives the homomorphic capability information of the terminal device.

In a possible implementation, the terminal device sends the homomorphic capability information of the terminal device to the first network device.

S431: The first network device determines the homomorphic encryption and decryption algorithm based on the homomorphic capability information of the terminal device.

In a possible implementation, when the first network device receives the homomorphic capability information of the third network device, the first network device determines the homomorphic encryption and decryption algorithm based on the homomorphic capability information of the third network device and the homomorphic capability information of the terminal device.

The third network device is the device participating in executing the homomorphic task.

Optionally, the first network device may determine the second key parameter based on the homomorphic capability information of the terminal device (and/or the homomorphic capability information of the third network device).

S432: The first network device sends first indication information to the terminal device.

Correspondingly, the terminal device receives the first indication information from the first network device.

The first indication information indicates the identifier of the homomorphic encryption and decryption algorithm.

Optionally, when the first network device determines the second key parameter in S431, the first indication information further indicates the second key parameter.

In a possible implementation, the first indication information is sent to the terminal device via NAS signaling.

Specifically, when the HECF determines the homomorphic encryption and decryption algorithm and indicates the homomorphic encryption and decryption algorithm to the first network device, the method 400 may further include S433.

S433: The first network device receives the identifier of the homomorphic encryption and decryption algorithm from the HECF.

Specifically, the HECF determines the homomorphic encryption and decryption algorithm based on the homomorphic capability information of the terminal device (and/or the homomorphic capability information of the third network device), and sends the identifier of the homomorphic encryption and decryption algorithm to the first network device, so that the first network device derives the homomorphic encryption and decryption key based on the corresponding homomorphic encryption and decryption algorithm.

Case 2: The key generation party is the HECF, or the key generation party is another device having a specific homomorphic management capability, or the like. This is not limited in this application. For example, in a scenario in which homomorphic tasks and keys are centrally managed, the HECF, serving as the key generation party, derives a homomorphic key corresponding to the homomorphic task.

In this case, the key generation party may obtain the first key parameter in S410 in the following manner.

In a possible implementation, the HECF generates the first key parameter.

For example, when the mobility management procedure is performed on the terminal device, the terminal device sends indication information to the HECF, to indicate that the network device accessed by the terminal device is to switch, and the HECF generates, based on the indication information, the updated root key, namely, the first key parameter, of the network device accessed by the terminal device.

It should be understood that, for Case 2, when the key generation party is the HECF, the HECF determines the homomorphic encryption and decryption algorithm, and the method 400 may further include S440 and S441.

S440: The HECF receives the homomorphic capability information of the terminal device.

In a possible implementation, the terminal device sends the homomorphic capability information of the terminal device to the HECF.

S441: The HECF determines the homomorphic encryption and decryption algorithm based on the homomorphic capability information of the terminal device.

In a possible implementation, when the HECF receives the homomorphic capability information of the third network device, the HECF determines the homomorphic encryption and decryption algorithm based on the homomorphic capability information of the third network device and the homomorphic capability information of the terminal device.

The third network device is the device participating in executing the homomorphic task.

Optionally, the HECF may determine the second key parameter based on the homomorphic capability information of the terminal device (and/or the homomorphic capability information of the third network device).

It should be understood that, when the key generation party is the HECF, after deriving the homomorphic encryption and decryption key in S420, the HECF sends the derived homomorphic encryption and decryption key to the homomorphic participant (the homomorphic encryption party and the homomorphic decryption party), and the method 400 may further include S442.

S442: The HECF sends the homomorphic encryption and decryption key to the first network device and the terminal device.

The first network device is a network device accessed by the terminal device.

In a possible implementation, for one homomorphic task, the first network device serves as the homomorphic encryption party, and the terminal device serves as the homomorphic decryption party.

Case 3: The key generation party is the terminal device.

For example, in a USIM key architecture scenario, the terminal device may serve as the key generation party to derive a homomorphic key corresponding to the homomorphic task.

In this case, the key generation party may obtain the first key parameter in S410 in the following manner.

In a possible implementation, the terminal device receives second indication information from the first network device, and the terminal device generates the first key parameter based on the second indication information.

The second indication information indicates that the root key of the network device accessed by the terminal device is updated, and the first network device is the network device accessed by the terminal device.

Specifically, the terminal device learns of, based on the received second indication information, that the root key of the network device accessed by the terminal device is updated, and then generates the first key parameter.

In a possible implementation, the second indication information is sent by the key generation party to the terminal device via NAS security mode signaling in a mobility registration update procedure or handover signaling in a cell handover procedure.

It should be understood that, for Case 3, when the key generation party is the terminal device, the first network device or the HECF determines the homomorphic encryption and decryption algorithm and indicates the homomorphic encryption and decryption algorithm to the terminal device, and the method 400 may further include S450.

S450: The terminal device receives the identifier of the homomorphic encryption and decryption algorithm from the first network device or the HECF.

Specifically, the first network device or the HECF determines the homomorphic encryption and decryption algorithm based on the homomorphic capability information of the terminal device (and/or the homomorphic capability information of the third network device), and sends the identifier of the homomorphic encryption and decryption algorithm to the terminal device, so that the terminal device derives the homomorphic encryption and decryption key based on the corresponding homomorphic encryption and decryption algorithm.

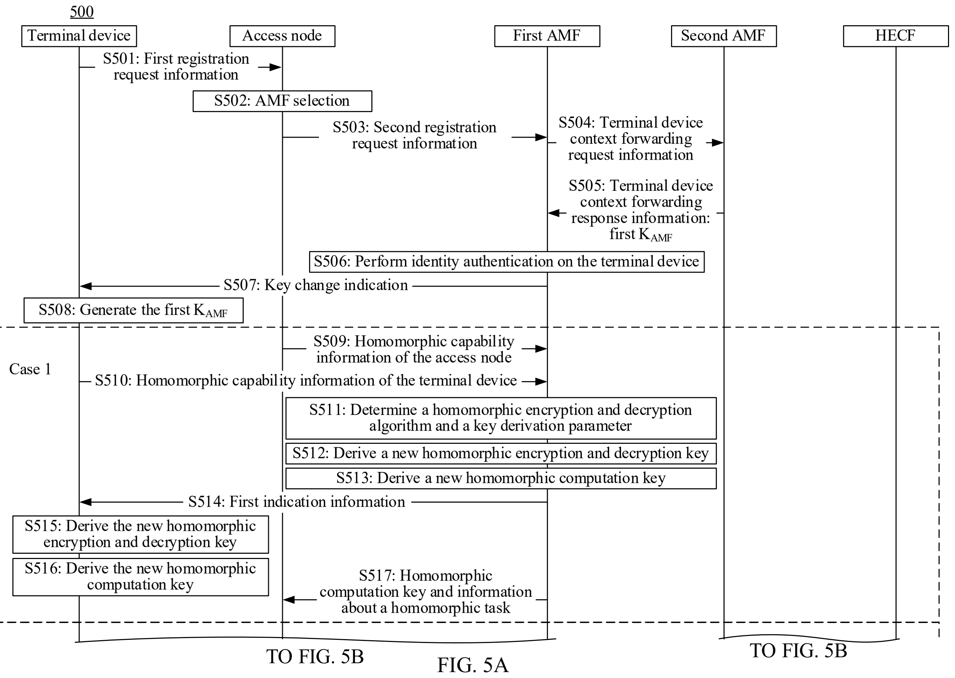

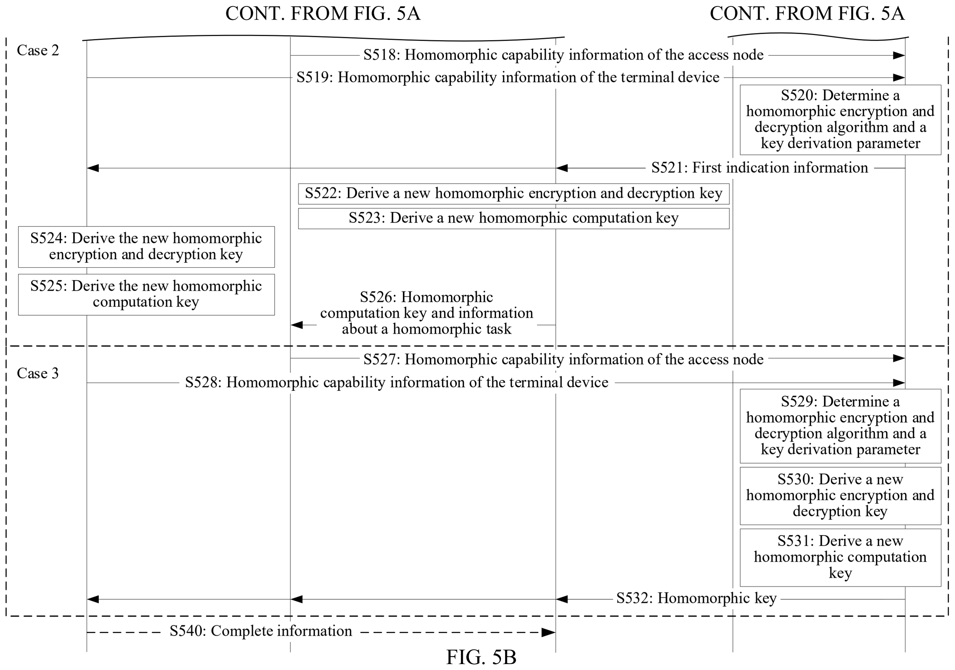

With reference to FIG. 4, the foregoing describes a process in which the key generation party re-derives the homomorphic encryption and decryption key when the root key of the network device accessed by the terminal device changes. The following describes in detail, based on FIG. 4 with reference to FIG. 5A and FIG. 5B to FIG. 7, a process in which the key generation party re-derives the homomorphic encryption and decryption key when the root key of the network device accessed by the terminal device changes in different scenarios.

FIG. 5A and FIG. 5B are a diagram of a homomorphic encryption-based communication method 500 according to an embodiment of this application. In one homomorphic task, if a homomorphic participant changes, for example, when a terminal device is handed over (moves) in an idle state, if the terminal device determines that a currently accessed tracking area is not included in a registration area previously provided by an AMF, the terminal device initiates a mobility registration update procedure to indicate a location change of the terminal device to a network side. In this case, a homomorphic encryption party or a homomorphic decryption party changes from the old AMF to a new AMF, so that an upper-level key (for example, $K_{AMF}$) of a homomorphic encryption and decryption key also changes, and a homomorphic key needs to be re-derived to ensure continuity of the homomorphic task. For example, in an AI application scenario, a first AMF is a key generation party and the homomorphic encryption party on a network side, and encrypts AI data or an AI model. A base station serves as a homomorphic computation party to perform homomorphic computation, and the terminal device serves as the homomorphic decryption party to decrypt a ciphertext. For example, in an AI application scenario, the terminal device serves as a key generation party and the homomorphic encryption party to encrypt AI data or an AI model. A base station or a road side unit serves as a homomorphic computation party to perform homomorphic computation, and a first AMF serves as the homomorphic decryption party to decrypt a ciphertext. The following describes the method 500 in detail based on FIG. 4 with reference to FIG. 5A and FIG. 5B.

S501: The terminal device sends first registration request information to an access node. Correspondingly, the access node receives the first registration request information from the terminal device. For example, the access node may be a RAN node.

The first registration request information is used to request to register the terminal device.

It should be understood that when the terminal device moves in the idle state, if the terminal device determines that the currently accessed tracking area is not included in the registration area previously provided by the AMF, the terminal device initiates the mobility registration update procedure to request to re-register the terminal device.

S502: The access node performs AMF selection.

It should be understood that after receiving the first registration request information of the terminal device, the access node selects a new AMF for the terminal device. For ease of description, the new AMF selected by the access node is referred to as a first AMF, and the AMF accessed by the terminal device before handover is referred to as a second AMF.

S503: The access node sends second registration request information to the first AMF.

Correspondingly, the first AMF receives the second registration request information from the access node.

The second registration request information is used to request the first AMF to register the terminal device.

S504: The first AMF sends terminal device context forwarding request information to the second AMF.

Correspondingly, the second AMF receives the terminal device context forwarding request information from the first AMF.

S505: The second AMF sends terminal device context forwarding response information to the first AMF.

The terminal device context forwarding response information includes first $K_{AMF}$, and the first $K_{AMF}$ is a newly generated root key or an updated root key of the first AMF.

It should be understood that the first $K_{AMF}$ may be the first key parameter in S410, that is, a key parameter related to a root key of the new AMF (the first AMF) to be accessed by the terminal device.

S506: Perform identity authentication on the terminal device.

It should be noted that, for performing identity authentication on the terminal device, refer to the descriptions in the conventional technology. This is not limited in this application.

S507: The first AMF sends a key change indication to the terminal device.

The key change indication indicates that the root key of the first AMF is updated.

It should be understood that the key change indication may be the second indication information in S430.

For example, the key change indication may include a flag (flag). When flag=1, the key change indication indicates that the root key of the first AMF is updated. When flag=0, the key change indication indicates that the root key of the first AMF is not updated.

In a possible implementation, the first AMF sends a NAS security mode command to the terminal device, where the NAS security mode command includes the key change indication.

S508: The terminal device generates the first $K_{AMF}$.

For example, after the terminal device receives the key change indication, when flag=1, the terminal device learns that a root key of a network device accessed by the terminal device changes, and further the terminal device generates, according to a preset protocol, a root key of a network device newly accessed by the terminal device, that is, the first $K_{AMF}$.

Further, when the root key of the network device accessed by the terminal device changes (updated to the first $K_{AMF}$), a homomorphic encryption and decryption algorithm needs to be re-determined based on the first $K_{AMF}$, and the homomorphic key needs to be re-derived. Based on different entities for determining the homomorphic encryption and decryption algorithm and deriving the homomorphic key, there are the following several cases.

Case 1: The first AMF determines the homomorphic encryption and decryption algorithm, and the first AMF and the terminal device derive the homomorphic key.

Case 2: The HECF determines the homomorphic encryption and decryption algorithm, and the first AMF and the terminal device derive the homomorphic key.

Case 3: The HECF determines the homomorphic encryption and decryption algorithm, and the HECF derives the homomorphic key.

The following further describes the foregoing three cases in detail with reference to FIG. 5A and FIG. 5B.

Case 1: The first AMF determines the homomorphic encryption and decryption algorithm, and the first AMF and the terminal device derive the homomorphic key. In this case, the first AMF serves as both the key generation party on the network side and the homomorphic encryption party, and the terminal device serves as both a key generation party on a terminal side and the homomorphic decryption party. The method 500 may further include S509 to S517.

S509: The access node sends homomorphic capability information of the access node to the first AMF. Correspondingly, the first AMF receives the homomorphic capability information from the access node.

The homomorphic capability information indicates a capability of performing homomorphic encryption and decryption or homomorphic computation. Specifically, the homomorphic capability information includes at least one of the following information: a homomorphic capability type, an identifier of the homomorphic encryption and decryption algorithm, a homomorphic computation function identifier, a security level $\lambda$, a decryption circuit depth d, and complexity of a ciphertext-based computation circuit.

The homomorphic capability type includes at least one of the following: partially (partially) homomorphism, somewhat (somewhat) homomorphism, leveled (leveled) homomorphism, and fully (fully) homomorphism. Specifically, partially homomorphism supports addition or multiplication; somewhat homomorphism supports addition and multiplication, but a computational depth is small; leveled homomorphism supports computation of any polynomial depth; and fully homomorphism supports computation of any depth.

The identifier of the homomorphic encryption and decryption algorithm includes at least one of the following: an addition partially homomorphic identifier (paillier), a multiplication partially homomorphic identifier (elgamal), a multiplication partially homomorphic identifier (rivest shamir adleman, RSA), a somewhat homomorphic identifier (BGN 05), a BGV (without bootstrapping: leveled homomorphism; with bootstrapping: fully homomorphism), BFV, CKKS, TFHE, and the like. This is not limited in this application.

The homomorphic computation function identifier includes at least one of the following: a convolutional neural network (convolutional neural network, CNN), a recurrent neural network (recurrent neural network, RNN), a generative adversarial network (generative adversarial net, GAN), a support vector machine (support vector machine, SVM), and the like. This is not limited in this application.

The security level $\lambda$ is a parameter related to security strength that can be provided by a homomorphic encryption algorithm.

The decryption circuit depth d indicates computational complexity of a homomorphic decryption circuit.

The complexity of the ciphertext-based computation circuit may include a number of basic operators and a homomorphic computational depth L.

It should be understood that the foregoing homomorphic capability information is merely an example, and a homomorphic capability may further include other information. This is not limited in this application. It should be further understood that a plurality of pieces of information included in the foregoing homomorphic capability may be randomly combined into a specified parameter set. This is not limited in this application.

It should be understood that in this case, the access node may be the second network device in S420. It should be understood that the second network device is a network device participating in the homomorphic task.

S510: The terminal device sends homomorphic capability information of the terminal device to the first AMF. Correspondingly, the first AMF receives the homomorphic capability information from the terminal device.

For the homomorphic capability information of the terminal device, refer to the related descriptions of the homomorphic capability information in S509. Details are not described herein again.

S511: The first AMF determines the homomorphic encryption and decryption algorithm and a key derivation parameter.

Specifically, the first AMF determines the homomorphic encryption and decryption algorithm and the key derivation parameter based on the homomorphic capability information of the access node in S509 and the homomorphic capability information of the terminal device in S510.

The key derivation parameter is the second key parameter in S420.

S512: The first AMF derives a new homomorphic encryption and decryption key.

Specifically, the first AMF derives the new homomorphic encryption and decryption key ($K_{enc\,new}$), based on the first $K_{AMF}$, the homomorphic encryption and decryption algorithm, and the key derivation parameter.

S513: The first AMF derives a new homomorphic computation key.

Specifically, the first AMF derives the new homomorphic computation key based on the homomorphic encryption and decryption key.

S514: The first AMF sends first indication information to the terminal device.

Correspondingly, the terminal device receives the first indication information from the first AMF.

The first indication information indicates the identifier of the homomorphic encryption and decryption algorithm and the key derivation parameter, so that the terminal device generates a corresponding homomorphic encryption and decryption key based on the first indication information.

S515: The terminal device derives the new homomorphic encryption and decryption key.

Specifically, the terminal device derives the new homomorphic encryption and decryption key ($K_{enc\,new}$), based on the first $K_{AMF}$, the homomorphic encryption and decryption algorithm, and the key derivation parameter.

S516: The terminal device derives the new homomorphic computation key.

Specifically, the terminal device derives the new homomorphic computation key based on the homomorphic encryption and decryption key.

It should be noted that a sequence of S512 and S513 and S514 to S516 is not limited in this application.

S517: The first AMF sends the homomorphic computation key and information about the homomorphic task to the access node.

Correspondingly, the access node receives the homomorphic computation key and the information about the homomorphic task from the first AMF.

It should be understood that, in this case, the access node serves as the homomorphic computation party, and receives the homomorphic computation key and the information about the homomorphic task from the first AMF, to perform homomorphic computation.

Specifically, the information about the homomorphic task includes at least one of the following: a homomorphic task role, a homomorphic computation key $K_{eval}$, a homomorphic computation key size, a ciphertext modulus q, a plaintext modulus t, an upper limit B of noise distribution, a decimal place corresponding to computational precision, a ciphertext-based computation vector dimension n, a homomorphic encryption algorithm identifier, and a homomorphic computation function identifier. The homomorphic task role may be the homomorphic encryption party, the homomorphic computation party, the homomorphic decryption party, or the like. The homomorphic computation key $K_{eval}$ may be a bootstrapping key (BSK), a key switching key (KSK), or the like.

In a possible implementation, the information about the homomorphic task may be sent in a manner of a homomorphic task configuration message, and a parameter of the homomorphic task configuration message may be shown in Table 1.

Table 1 Parameter of the homomorphic task configuration message

| Parameter list | Parameter name | Specific parameter | Description |
|---|---|---|---|
| Homomorphic task index | HE task ID | ID 1, ID 2, ... | Unique identifier of a homomorphic task in an HETM region |
| Role in a homomorphic task | HE enabler type | Homomorphic encryption party, homo-morphic computation party, homo-morphic decryption party, ... | Configure a role of an HE enabler in the homomorphic task |
| Participant identifier | HE node type and ID | {gNB, gNB ID}, {UE, UE ID}, ... | Node type and ID information of a homomorphic participant |
| Homomorphic encryption algorithm identifier | HE algorithm id | BGV, BFV, CKKS, TFHE, ... | Homomorphic encryption algorithm identifier |
| Homomorphic com-putation algorithm identifier | ciphertext algo-rithm id | CNN, RNN, GAN, SVM, ... | Ciphertext-based computation function identifier |

Case 2: The HECF determines the homomorphic encryption and decryption algorithm, and the first AMF and the terminal device derive the homomorphic key. In this case, the first AMF serves as both the key generation party on the network side and the homomorphic encryption party, and the terminal device serves as both a key generation party on a terminal side and the homomorphic decryption party. The method 500 may further include S518 to S526.

S518: The access node sends homomorphic capability information of the access node to the HECF. Correspondingly, the HECF receives the homomorphic capability information from the access node.

It should be understood that in this case, the access node may be the second network device in S420. It should be understood that the second network device is a network device participating in the homomorphic task.

S519: The terminal device sends homomorphic capability information of the terminal device to the HECF. Correspondingly, the HECF receives the homomorphic capability information from the terminal device.

For descriptions of the homomorphic capability information, refer to the related descriptions of the homomorphic capability information in S509. Details are not described herein again.

S520: The HECF determines the homomorphic encryption and decryption algorithm and a key derivation parameter.

Specifically, the HECF determines the homomorphic encryption and decryption algorithm and the key derivation parameter based on the homomorphic capability information of the access node in S518 and the homomorphic capability information of the terminal device in S519.

The key derivation parameter is the second key parameter in S420.

S521: The HECF sends first indication information.

Specifically, the HECF separately sends the first indication information to the first AMF and the terminal device. The first indication information indicates an identifier of the homomorphic encryption and decryption algorithm and the key derivation parameter.

Further, the first AMF and the terminal device derive the homomorphic key based on the homomorphic encryption and decryption algorithm and the key derivation parameter.

S522: The first AMF derives a new homomorphic encryption and decryption key.

Specifically, the first AMF derives the new homomorphic encryption and decryption key based on the first $K_{AMF}$, the homomorphic encryption and decryption algorithm, and the key derivation parameter.

S523: The first AMF derives a new homomorphic computation key.

Specifically, the first AMF derives the new homomorphic computation key based on the homomorphic encryption and decryption key.

S524: The terminal device derives the new homomorphic encryption and decryption key.

Specifically, the terminal device derives the new homomorphic encryption and decryption key based on the first $K_{AMF}$, the homomorphic encryption and decryption algorithm, and the key derivation parameter.

S525: The terminal device derives the new homomorphic computation key.

Specifically, the terminal device derives the new homomorphic computation key based on the homomorphic encryption and decryption key.

It should be noted that a sequence of S522 and S523 and S524 to S526 is not limited in this application.

S526: The first AMF sends the homomorphic computation key and information about the homomorphic task to the access node. Correspondingly, the access node receives the homomorphic computation key and the information about the homomorphic task from the first AMF.

It should be understood that, in this case, the access node serves as the homomorphic computation party, and receives the homomorphic computation key and the information about the homomorphic task from the first AMF, to perform homomorphic computation.

For descriptions of the information about the homomorphic task, refer to the related descriptions of the information about the homomorphic task in S517. Details are not described herein again.

Case 3: The HECF determines the homomorphic encryption and decryption algorithm, and the HECF derives the homomorphic key. In other words, in this case, it may be understood as that the key generation party is the HECF, and the HECF separately sends the generated homomorphic key to the homomorphic encryption party, the homomorphic decryption party, and the homomorphic computation party. The method 500 may further include S527 to S532.

S527: The access node sends homomorphic capability information of the access node to the HECF. Correspondingly, the HECF receives the homomorphic capability information from the access node.

It should be understood that in this case, the access node may be the second network device in S420. The second network device is a network device participating in the homomorphic task.

S528: The terminal device sends homomorphic capability information of the terminal device to the HECF. Correspondingly, the HECF receives the homomorphic capability information from the terminal device.

For descriptions of the homomorphic capability information, refer to the related descriptions of the homomorphic capability information in S509. Details are not described herein again.

S529: The HECF determines the homomorphic encryption and decryption algorithm and a key derivation parameter.

Specifically, the HECF determines the homomorphic encryption and decryption algorithm and the key derivation parameter based on the homomorphic capability information of the access node in S527 and the homomorphic capability information of the terminal device in S528.

The key derivation parameter may be the second key parameter in S420.

S530: The HECF derives a new homomorphic encryption and decryption key.

Specifically, the HECF derives the new homomorphic encryption and decryption key based on the first $K_{AMF}$, the homomorphic encryption and decryption algorithm, and the key derivation parameter.

S531: The HECF derives a new homomorphic computation key. Specifically, the HECF derives the new homomorphic computation key based on the homomorphic encryption and decryption key.

S532: The HECF sends the homomorphic key.

Specifically, the HECF sends a homomorphic encryption key to the first AMF (the homomorphic encryption party), sends a homomorphic decryption key to the terminal device (the homomorphic decryption party), and sends the homomorphic computation key and the information about the homomorphic task to the access node (the homomorphic computation party).

For descriptions of the information about the homomorphic task, refer to the related descriptions of the information about the homomorphic task in S517. Details are not described herein again.

Optionally, in S540, the terminal device sends complete information to the first AMF. Correspondingly, the first AMF receives the complete information from the terminal device.

In a possible implementation, the complete information indicates that a NAS security mode is completed.

Based on the foregoing solution, in the mobility registration update procedure of a mobility management procedure, when the upper-level key of the homomorphic key of the homomorphic task corresponding to the terminal device is updated due to handover of the terminal device, the homomorphic key can be re-derived in a timely manner based on the updated upper-level key of the homomorphic key, thereby ensuring continuity of the homomorphic task of the terminal device in the handover process.

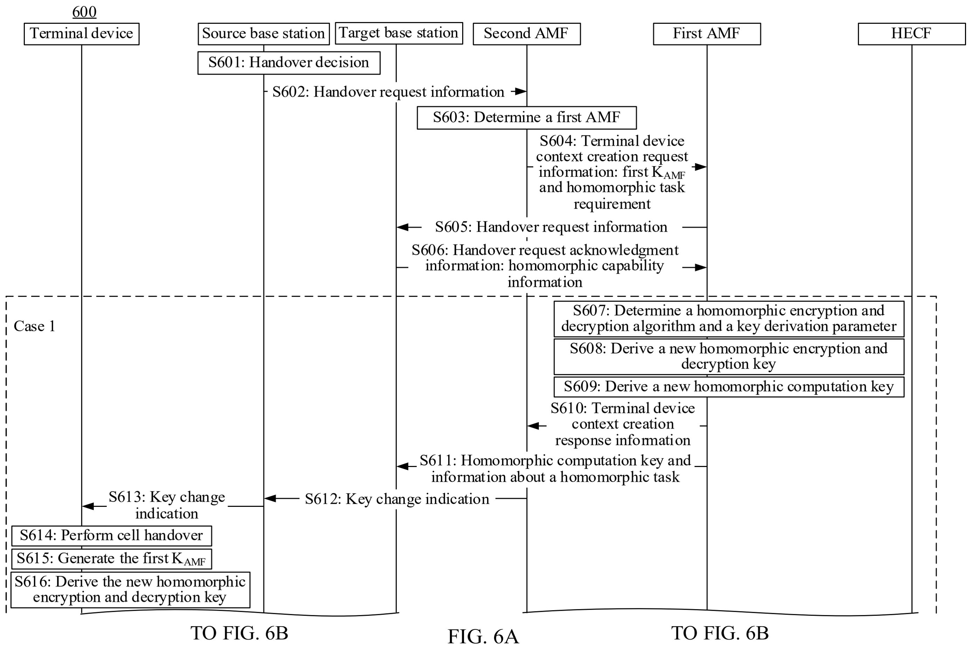

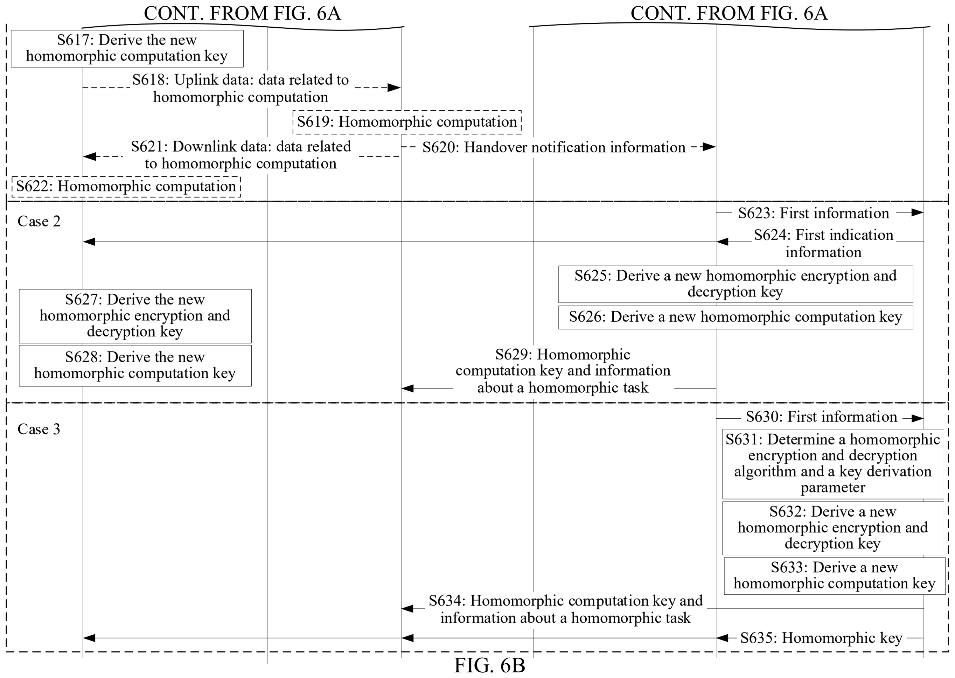

FIG. 6A and FIG. 6B are a diagram of a homomorphic encryption-based communication method 600 according to an embodiment of this application. The method is applicable to a scenario in which both an access node accessed by a terminal device and a corresponding core network function change. In one homomorphic task, if a homomorphic participant changes, for example, when a terminal device in a connected state is handed over from a source base station (corresponding to a source cell) to a target base station (corresponding to a target cell), reference signal received power (reference signal received power, RSRP) of the source base station becomes weaker, RSRP of the target base station becomes stronger, and there is no Xn link for handover between the base station of the source cell and the base station of the target cell (or there is no Xn link between the source base station and the target base station), a homomorphic encryption party or a homomorphic decryption party changes from an old network function (for example, an old AMF) to a new network function (for example, a new AMF), a homomorphic key generation party changes from an old network function (for example, an old AMF) to a new network function (for example, a new AMF), and a homomorphic computation party changes from the source base station to the target base station, so that an upper-level key (for example, $K_{AMF}$) of a homomorphic encryption and decryption key also changes, and a homomorphic key needs to be re-derived to ensure continuity of the homomorphic task. For example, in an AI application scenario, a first AMF is a key generation party and the homomorphic encryption party on a network side, and encrypts an AI model or AI data. The terminal device serves as the homomorphic decryption party to decrypt a ciphertext. For example, in an AI application scenario, the terminal device serves as a key generation party and the homomorphic encryption party to encrypt an AI model or AI data. A first AMF serves as the homomorphic decryption party to decrypt a ciphertext. The following describes the method 600 in detail based on FIG. 4 and FIG. 5A and FIG. 5B with reference to FIG. 6A and FIG. 6B.

S601: The source base station makes a handover decision.

It should be understood that when the terminal device in the connected state is handed over from the source base station (corresponding to the source cell) to the target base station (corresponding to the target cell), the RSRP of the source base station becomes weaker, the RSRP of the target base station becomes stronger, and there is no Xn link for handover between the base station of the source cell and the base station of the target cell (or there is no Xn link between the source base station and the target base station), the source base station makes the handover decision, to determine that base station handover needs to be performed.

Specifically, for making the handover decision by the source base station, refer to the conventional technology. This is not limited in this application.

S602: The source base station sends handover request information to a second AMF.

Correspondingly, the second AMF receives the handover request information from the source base station.

It should be understood that the source base station sends the handover request information to a source NF (or referred to as an access node (for example, a RAN) in coverage of the source NF) of the terminal device. The source NF is not limited in this application. For ease of description, in this embodiment, an example in which the NF is an AMF is used for description, that is, the source NF corresponding to the source base station is the second AMF.

The handover request information indicates that base station handover needs to be performed. For example, the handover request information may be HandOver Required.

S603: The second AMF determines the first AMF.

Specifically, after receiving the handover request information, the second AMF selects a target AMF to which handover can be performed. For ease of description, the target AMF is used as the first AMF.

S604: The second AMF sends terminal device context creation request information to the first AMF. Correspondingly, the first AMF receives the terminal device context creation request information from the second AMF.

The terminal device context creation request information includes first $K_{AMF}$ and a homomorphic task requirement.

Specifically, the first $K_{AMF}$ is a newly generated root key or a root key of the target AMF (namely, the first AMF) that is newly accessed by the terminal device.

It should be understood that, because the terminal device is handed over from the source station to the target station, that is, handed over from the second AMF to the first AMF, it may be understood as that a root key of a network device accessed by the terminal device is updated, to be specific, the root key of the network device accessed by the terminal device is updated from a root key of the second AMF to the root key of the first AMF. It should be understood that the first $K_{AMF}$ may be the first key parameter in S410.

Specifically, the homomorphic task requirement includes a homomorphic task type, homomorphic task quality, a number of homomorphic encryption parties, a homomorphic encryption party parameter, a number of homomorphic users, and a homomorphic user parameter.

In a possible implementation, the homomorphic task requirement may be sent in a manner of a homomorphic task request message, and a parameter of the homomorphic task request message may be shown in Table 2.

Table 2 Parameter of the homomorphic task request message

| Parameter list | Parameter name | Specific parameter | Description |
|---|---|---|---|
| Homomorphic task type | HE task type | AI training/inference, data compression, ... | Homomorphic computation type in a ciphertext |
| Homomorphic task quality | HE QoS | {Delay requirement, security requirement, ...} | Homomorphic task quality |

(continued)

| Parameter list | Parameter name | Specific parameter | Description |
|---|---|---|---|
| Number of homo-morphic encryption par-ties | encryption number | Number=1, 2, 3, ... | Number of data homomorphic en-cryption participants |
| Homomorphic encryp-tion party parameter | HE enc para | {global id, data type, data rate, ...} | Global id, data type, data rate, and the like of a data encryption participant |
| Number of data users | consumer number | Number=1, 2, 3, ... | Number of data users |
| Data user parameter | consumer para | {global id, data type, data rate, ... } | Global id, data type, data rate, and the like of a data user |

It should be noted that the foregoing homomorphic task requirement is merely an example. This is not limited in this application.

S605: The first AMF sends handover request information to the target base station.

Correspondingly, the target base station receives the handover request information from the first AMF.

The handover request information includes the homomorphic task requirement.

In a possible implementation, the first AMF selects, based on the homomorphic task requirement, a target base station that meets the homomorphic task requirement, and sends the handover request information to the target base station.

S606: The target base station sends handover request acknowledgment information to the first AMF.

Correspondingly, the first AMF receives the handover request acknowledgment information from the target base station.

In a possible implementation, after receiving the handover request information, the target base station determines whether the target base station meets the homomorphic task requirement, and when the target base station meets the homomorphic task requirement, sends the handover request acknowledgment information to the first AMF, where the handover request acknowledgment information carries homomorphic capability information of the target base station. For the homomorphic capability information of the target base station, refer to the related descriptions of the homomorphic capability information in S509. Details are not described herein again.

Further, when the terminal device is handed over to the first AMF, a homomorphic encryption and decryption algorithm is re-determined based on the root key (the first $K_{AMF}$) of the first AMF, and the homomorphic key is re-derived. Based on different entities for determining the homomorphic encryption and decryption algorithm and deriving the homomorphic key, there are the following several cases.

Case 1: The first AMF determines the homomorphic encryption and decryption algorithm, and the first AMF and the terminal device derive the homomorphic key.

Case 2: An HECF determines the homomorphic encryption and decryption algorithm, and the first AMF and the terminal device derive the homomorphic key.

Case 3: An HECF determines the homomorphic encryption and decryption algorithm, and the HECF derives the homomorphic key.

The following further describes the foregoing three cases in detail with reference to FIG. 6A and FIG. 6B.

Case 1: The first AMF determines the homomorphic encryption and decryption algorithm, and the first AMF and the terminal device derive the homomorphic key. In this case, the first AMF serves as both the key generation party on the network side and the homomorphic encryption party, and the terminal device serves as both a key generation party on a terminal side and the homomorphic decryption party. The method 600 may further include S607 to S622.

S607: The first AMF determines the homomorphic encryption and decryption algorithm and a key derivation parameter.

In a possible implementation, after the first AMF receives the handover request acknowledgment information, if both the target AMF and the target base station are homomorphic participants of the homomorphic task, and it is determined that a homomorphic capability of the target base station and a homomorphic capability of the first AMF meet the homomorphic task requirement, the first AMF determines the homomorphic encryption and decryption algorithm and the key derivation parameter based on the homomorphic capability information of the target base station and homomorphic capability information of the first AMF.

The key derivation parameter is the second key parameter in S420.

Optionally, if the first AMF determines that the homomorphic capability of the target base station and the homomorphic capability of the first AMF do not meet the homomorphic task requirement, the first AMF reselects a target base station and a target AMF that meet the homomorphic task requirement. S608: The first AMF derives a new homomorphic encryption and decryption key.

Specifically, the first AMF derives the new homomorphic encryption and decryption key based on the first $K_{AMF}$, the homomorphic encryption and decryption algorithm, and the key derivation parameter.

S609: The first AMF derives a new homomorphic computation key.

Specifically, the first AMF derives the new homomorphic computation key based on the homomorphic encryption and decryption key.

S610: The first AMF sends terminal device context creation response information to the second AMF.

Correspondingly, the second AMF receives the terminal device context creation response information from the first AMF.

S611: The first AMF sends the homomorphic computation key and information about the homomorphic task to the target base station.

Correspondingly, the target base station receives the homomorphic computation key and the information about the homomorphic task from the first AMF.

For descriptions of the information about the homomorphic task, refer to the related descriptions of the information about the homomorphic task in S517. Details are not described herein again.

S612: The second AMF sends a key change indication to the source base station. Correspondingly, the source base station receives the key change indication from the second AMF.

The key change indication indicates that the root key of the first AMF is updated.

For example, the key change indication may include a flag (flag). When flag=1, the key change indication indicates that the root key of the first AMF is updated. When flag=0, the key change indication indicates that the root key of the first AMF is not updated.

In a possible implementation, the first AMF sends a NAS security mode command to the terminal device, where the NAS security mode command includes the key change indication.

S613: The source base station sends the key change indication to the terminal device. Correspondingly, the terminal device receives the key change indication from the source base station. Specifically, the source base station forwards the key change indication received in S612 to the terminal device.

In a possible implementation, the source base station sends a handover command to the terminal device, where the handover command includes the key change indication.

S614: The terminal device performs cell handover.

Specifically, after receiving the handover command, the terminal device is detached from the source cell, completes random access to the target base station, and accesses a new cell.

S615: The terminal device generates the first $K_{AMF}$.

Specifically, after receiving the key change flag, the terminal device learns that a root key of a network device accessed by the terminal device changes, and further the terminal device generates, according to a preset protocol, a root key of a network device newly accessed by the terminal device, that is, the first $K_{AMF}$.

S616: The terminal device derives a new homomorphic key.

Specifically, the terminal device derives the new homomorphic encryption and decryption key based on the first $K_{AMF}$, the homomorphic encryption and decryption algorithm, and the key derivation parameter, and derives the new homomorphic computation key based on the homomorphic encryption and decryption key.

S617: The terminal device sends handover acknowledgment information to the target base station.

Correspondingly, the target base station receives the handover acknowledgment information from the terminal device.

Specifically, after the terminal device successfully performs random access to the target base station, the terminal device sends the handover acknowledgment information to the target base station.

It should be noted that a sequence of S616 and S617 is not limited in this application. For example, S616 may be performed before S617; or S617 may be performed before S616; or S616 and S617 are simultaneously performed.

Optionally, in S618, the terminal device sends uplink data to the target base station. Correspondingly, the target base station receives the uplink data from the terminal device.

The uplink data includes data related to homomorphic computation.

For example, the data related to homomorphic computation may be a homomorphic ciphertext obtained through homomorphic encryption, for example, privacy data like an AI model and perception data of the terminal device.

Optionally, in S619, the target base station performs homomorphic computation.

Specifically, when the target base station needs to serve as the homomorphic computation party in the homomorphic task, the target base station performs, based on the homomorphic task requirement and the homomorphic computation key, homomorphic computation on the data related to homomorphic computation.

For a specific process of homomorphic computation, refer to the related descriptions of the homomorphic computation technology in the conventional technology. This is not limited in this application.

Optionally, in S620, the target base station sends handover notification information to the first AMF. Correspondingly, the first AMF receives the handover notification information from the target base station.

The handover notification information is used to notify the target base station that handover succeeds.

For example, the handover notification information may be HandOver Notify.

Optionally, in S621, the target base station sends downlink data to the terminal device. Correspondingly, the terminal device receives the downlink data from the target base station.

The downlink data includes data related to homomorphic computation.

For example, the data related to homomorphic computation may be a homomorphic ciphertext obtained through homomorphic encryption, for example, privacy data like an AI model and perception data.

Optionally, in S622, the terminal device performs homomorphic computation.

Specifically, when the terminal device needs to serve as the homomorphic computation party in the homomorphic task, the terminal device performs, based on the homomorphic task requirement and the homomorphic computation key, homomorphic computation on the data related to homomorphic computation.

Optionally, the second AMF sends a terminal device context release command to the source base station. Specifically, when a handover procedure is completed, the second AMF sends the terminal device context release command to the source base station.

The terminal device context release command is used to notify the source base station to release context information of the terminal device.

Case 2: The HECF determines the homomorphic encryption and decryption algorithm, and the first AMF and the terminal device derive the homomorphic key. In this case, the first AMF serves as both the key generation party on the network side and the homomorphic encryption party, and the terminal device serves as both a key generation party on a terminal side and the homomorphic decryption party. The method 600 may further include S623 to S629.

S623: The first AMF sends first information to the HECF. Correspondingly, the HECF receives the first information from the first AMF. The first information includes the homomorphic task requirement, the first $K_{AMF}$, the homomorphic capability of the target base station, and the homomorphic capability of the first AMF.

Specifically, after the first AMF receives the handover request acknowledgment information from the target base station, if the target AMF and the target base station are homomorphic participants of the homomorphic task, and it is determined that a homomorphic capability of the target base station and a homomorphic capability of the first AMF meet the homomorphic task requirement, the first AMF sends the first information to the HECF.

S624: The HECF sends first indication information. The first indication information indicates an identifier of the homomorphic encryption and decryption algorithm and a key derivation parameter.

Specifically, the HECF determines the homomorphic encryption and decryption algorithm and the key derivation parameter based on the first information, and separately sends the first indication information to the first AMF and the terminal device.

Further, the first AMF and the terminal device derive the homomorphic key based on the homomorphic encryption and decryption algorithm and the key derivation parameter.

S625: The first AMF derives a new homomorphic encryption and decryption key.

Specifically, the first AMF derives the new homomorphic encryption and decryption key based on the first $K_{AMF}$, the homomorphic encryption and decryption algorithm, and the key derivation parameter.

S626: The first AMF derives a new homomorphic computation key.

Specifically, the first AMF derives the new homomorphic computation key based on the homomorphic encryption and decryption key.

S627: The terminal device derives the new homomorphic encryption and decryption key.

Specifically, the terminal device derives the new homomorphic encryption and decryption key based on the first $K_{AMF}$, the homomorphic encryption and decryption algorithm, and the key derivation parameter.

S628: The terminal device derives the new homomorphic computation key.

Specifically, the terminal device derives the new homomorphic computation key based on the homomorphic encryption and decryption key.

It should be noted that a sequence of S625 and S626 and S627 and S628 is not limited in this application.

S629: The first AMF sends the homomorphic computation key and information about the homomorphic task to the target base station.

Correspondingly, the target base station receives the homomorphic computation key and the information about the homomorphic task from the first AMF.

It should be understood that, in this case, the target base station serves as the homomorphic computation party, and receives the homomorphic computation key and the information about the homomorphic task from the first AMF, to perform homomorphic computation.

For descriptions of the information about the homomorphic task, refer to the related descriptions of the information about the homomorphic task in S517. Details are not described herein again.

In Case 2, S610, S612 to S614, and S618 to S622 in Case 1 can still be performed. Details are not described herein again.

Case 3: The HECF determines the homomorphic encryption and decryption algorithm, and the HECF derives the homomorphic key. In other words, in this case, it may be understood as that the key generation party is the HECF, and the HECF separately sends the generated homomorphic key to the homomorphic encryption party, the homomorphic decryption party, and the homomorphic computation party. The method 600 may further include S630 to S635.

S630: The first AMF sends first information to the HECF. Correspondingly, the HECF receives the first information from the first AMF.

For specific content in S630, refer to S623. Details are not described herein again.

S631: The HECF determines the homomorphic encryption and decryption algorithm and a key derivation parameter.

Specifically, the HECF determines the homomorphic encryption and decryption algorithm and the key derivation parameter based on the homomorphic capability information of the target base station and the homomorphic capability information of the first AMF.

The key derivation parameter is the second key parameter in S420.

S632: The HECF derives a new homomorphic encryption and decryption key.

Specifically, the HECF derives the new homomorphic encryption and decryption key based on the first $K_{AMF}$, the homomorphic encryption and decryption algorithm, and the key derivation parameter.

S633: The HECF derives a new homomorphic computation key.

Specifically, the HECF derives the new homomorphic computation key based on the homomorphic encryption and decryption key.

S634: The HECF sends the homomorphic computation key and information about the homomorphic task to the target base station.

Correspondingly, the target base station receives the homomorphic computation key and the information about the homomorphic task from the HECF.

For descriptions of the information about the homomorphic task, refer to the related descriptions of the information about the homomorphic task in S517. Details are not described herein again.

S635: The HECF sends the homomorphic key.

Specifically, the HECF sends a homomorphic encryption key to the first AMF (the homomorphic encryption party), sends a homomorphic decryption key to the terminal device (the homomorphic decryption party), and sends the homomorphic computation key and the information about the homomorphic task to the target base station (the homomorphic computation party).

It should be noted that, in Case 3, S610, S612 to S614, and S618 to S622 in Case 1 can still be performed. Details are not described herein again.

Based on the foregoing solution, in a mobility management procedure, when an upper-level key of the homomorphic key of the homomorphic task of the terminal device is updated due to base station handover of the terminal device, the homomorphic key can be re-derived in a timely manner based on an updated upper-level key of the homomorphic key, thereby ensuring continuity of the homomorphic task of the terminal device in the handover process.

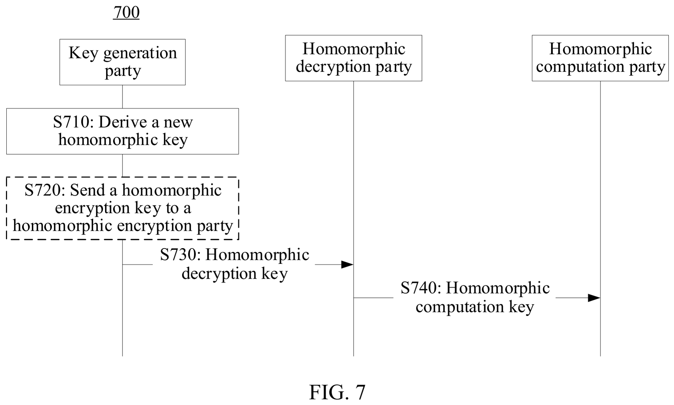

FIG. 7 is a diagram of a homomorphic encryption-based communication method 700 according to an embodiment of this application. In one homomorphic task, if a homomorphic participant does not change and only an upper-level key of a homomorphic key is updated, for example, a homomorphic encryption and decryption key is generated based on a root key of a homomorphic encryption party (that is, the root key of the homomorphic encryption party is an upper-level key of the homomorphic encryption and decryption key), if the root key is updated, and the homomorphic encryption and decryption key is updated, a homomorphic key needs to be re-derived based on the updated root key, to ensure continuity of the homomorphic task. The following describes the method 700 in detail with reference to FIG. 7.

S710: A key generation party derives a new homomorphic key.

The homomorphic key includes a homomorphic encryption key, a homomorphic decryption key, and a homomorphic computation key.

The key generation party may be a network device (for example, a base station), a terminal device, a network function, or the like. This is not limited in this application.

Specifically, when the upper-level key of the homomorphic key is updated, the key generation party re-derives the homomorphic key based on an updated upper-level key.

In a possible implementation, when the key generation party is also a homomorphic encryption party, for example, when the key generation party is a gNB #1, the gNB #1 derives a new homomorphic encryption key, homomorphic decryption key, and homomorphic computation key based on an updated root key $K_{gNB1}$ of the gNB #1.

In a possible implementation, when the key generation party is a network function, for example, when the key generation party is an AMF, the AMF derives a new homomorphic encryption key, homomorphic decryption key, and homomorphic computation key based on an updated root key $K_{AMF}$ of the AMF.

It should be understood that, for specific processes in which the key generation party derives a homomorphic encryption and decryption key and the homomorphic decryption key based on the upper-level key, and derives the homomorphic computation key based on the homomorphic encryption and decryption key and the homomorphic decryption key, refer to the related procedure, in the conventional technology, in which the key generation party derives the homomorphic key. This is not limited in this application.

Optionally, in S720, the key generation party sends the homomorphic encryption key to the homomorphic encryption party.

The homomorphic encryption party may be a network device (for example, a base station), a terminal device, a network function, or the like. This is not limited in this application.

In a possible implementation, when the key generation party is also a homomorphic encryption party, the homomorphic encryption party obtains a re-derived homomorphic encryption key.

For example, when both the key generation party and the homomorphic encryption party are gNBs #1, the gNB #1 obtains the re-derived homomorphic encryption key.

In a possible implementation, when the key generation party is a network function, the key generation party sends the re-derived homomorphic encryption key to the homomorphic encryption party.

For example, when the key generation party is an AMF, and the homomorphic encryption party is a gNB#1, the AMF sends a re-derived homomorphic encryption key to the gNB#1.

S730: The key generation party sends the homomorphic decryption key to the homomorphic decryption party.

The homomorphic decryption party may be a network device (for example, a base station), a terminal device, a network function, or the like. This is not limited in this application.

Specifically, after re-deriving the homomorphic decryption key, the key generation party sends the new homomorphic decryption key to the homomorphic decryption party.

In a possible implementation, when the key generation party is a gNB#1, and the homomorphic decryption party is a gNB#3, the gNB#1 sends a re-derived homomorphic decryption key to the gNB#3.

For example, the gNB #1 sends the derived new homomorphic decryption key to the gNB #3 through an Xn interface.

In a possible implementation, when the key generation party is an AMF and the homomorphic decryption party is a gNB#3, the AMF sends a re-derived homomorphic decryption key to the gNB#3.

For example, the AMF sends the derived new homomorphic decryption key to the gNB #3 through an Ng interface.

S740: The key generation party sends the homomorphic computation key to a homomorphic computation party.

The homomorphic computation party may be a network device (for example, a base station), a terminal device, a network function, or the like. This is not limited in this application.

Specifically, after re-deriving the homomorphic computation key, the key generation party sends the new homomorphic computation key to the homomorphic computation party.

For example, when the key generation party is a gNB#1, and the homomorphic computation party is a gNB#2, the gNB#1 sends a re-derived homomorphic computation key to the gNB#2.

For example, when the key generation party is an AMF, and the homomorphic computation party is a gNB#2, the AMF sends a re-derived homomorphic computation key to the gNB#2.

Optionally, the key generation party sends information about the homomorphic task to the homomorphic computation party.

For descriptions of the information about the homomorphic task, refer to the related descriptions of the information about the homomorphic task in S517. Details are not described herein again.

It should be understood that, in the method 700, the gNB#1, the gNB#2, and the gNB#3 may be network devices accessed by the terminal device. This is not limited in this application.

Based on the foregoing solution, in a communication system, when the homomorphic participant of the homomorphic task in which the terminal device participates does not change, but the upper-level key of the homomorphic key changes, the homomorphic participant can re-derive the homomorphic key based on the updated upper-level key of the homomorphic key, thereby ensuring continuity of the homomorphic task of the terminal device.

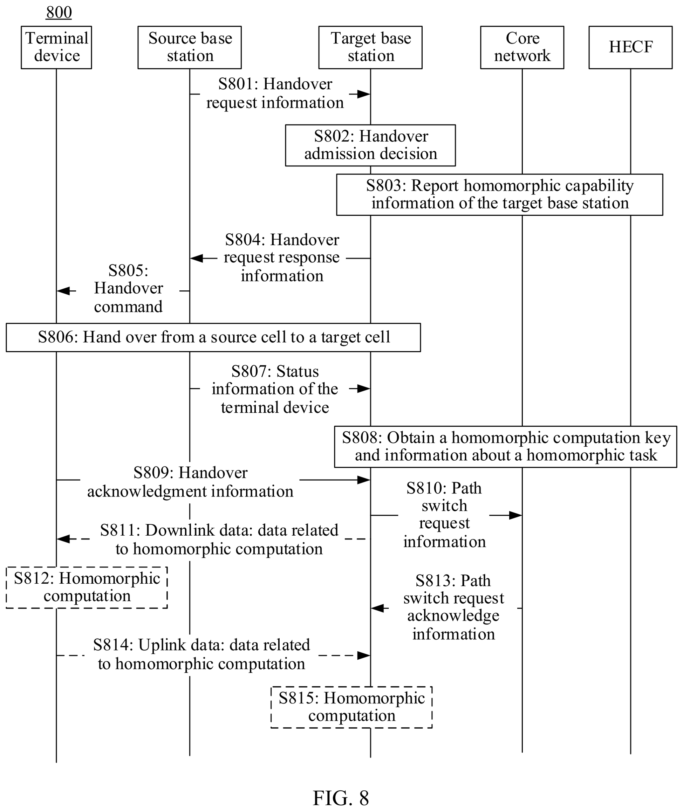

FIG. 8 is a diagram of a homomorphic encryption-based communication method 800 according to an embodiment of this application. In one homomorphic task, if a homomorphic participant changes, for example, when a terminal device in a connected state is handed over from a source base station (corresponding to a source cell) to a target base station (corresponding to a target cell), RSRP of the source base station becomes weaker, and RSRP of the target base station becomes stronger, a homomorphic computation party is handed over from the source base station to the target base station (that is, the homomorphic computation party changes). However, if an upper-level key of a homomorphic encryption and decryption key does not change, a homomorphic key does not need to be re-derived, and a new homomorphic computation party needs to obtain a homomorphic computation key related to the homomorphic task, to ensure continuity of the homomorphic task. In FIG. 8, the source base station is an old homomorphic computation party, and the target base station is the new homomorphic computation party. The following describes the method 800 in detail with reference to FIG. 8.

S801: The source base station sends handover request information to the target base station.

Specifically, the terminal device performs downlink measurement (for example, SSB-based downlink measurement or CSI-RS based downlink measurement), and reports a measurement report to the source base station. The source base station makes a handover decision (HO decision) based on the measurement report reported by the terminal device and radio resource management information on the source base station, selects the target base station for the terminal device, and sends the handover request information (for example, an HO Request message) to the target base station.

The handover request information includes at least one of the following: a terminal device security capability, an encryption/integrity protection security policy, a next hop chaining counter parameter (the next hop chaining counter parameter, NCC), $K_{NG-RAN*}$, and a homomorphic task requirement.

The terminal device security capability indicates an encryption algorithm and an integrity protection algorithm that are supported by the terminal device, and a homomorphic encryption algorithm that is supported by the terminal device.

The homomorphic task requirement includes at least one of the following: a homomorphic task type, homomorphic task quality, a number of homomorphic encryption parties, a homomorphic encryption party parameter, a number of homomorphic users, and a homomorphic user parameter. For the homomorphic task requirement, refer to the related descriptions of the homomorphic task requirement in S604. Details are not described herein again.

S802: The target base station performs handover admission decision (HO admission control).

Specifically, after receiving the handover request information, the target base station determines whether a homomorphic capability of the target base station can meet the homomorphic task requirement.

It should be understood that, if the target base station allows the terminal device to be handed over to the target cell, the target base station allocates a dedicated admission resource to the terminal device.

S803: The target base station reports homomorphic capability information of the target base station.

In a possible implementation, the target base station reports the homomorphic capability information of the target base station to a core network element.

In a possible implementation, the target base station reports, to an HECF, a requirement of a homomorphic task in which a terminal device that is performing cell handover participates and the homomorphic capability information of the target base station.

For the homomorphic capability information of the target base station, refer to the related descriptions of the homomorphic capability information in S509. Details are not described herein again.

It should be understood that the target base station reports the homomorphic capability information of the target base station to a key generation party (the core network element or the HECF), so that the key generation party can determine, based on the homomorphic capability information of the target base station, a homomorphic algorithm used to generate a homomorphic key, thereby ensuring that the homomorphic task can be successfully executed.

S804: The target base station sends handover request response information to the source base station.

Correspondingly, the source base station receives the handover request response information from the target base station.

In a possible implementation, if the target base station determines, in S802, that the homomorphic capability of the target base station meets the homomorphic task requirement, a handover request response sent by the target base station to the source base station is handover request acknowledgment information (HO Req terminal device st ACK message), and the handover request response includes information required by the terminal device to access the target cell.

In a possible implementation, if the target base station determines, in S802, that the homomorphic capability of the target base station does not meet the homomorphic task requirement, a handover request response sent by the target base station to the source base station includes handover preparation failure information, and the handover preparation failure information includes a cause value. For example, the target base station does not meet the homomorphic task requirement.

S805: The source base station sends a handover command to the terminal device.

Correspondingly, the terminal device receives the handover command from the source base station.

In a possible implementation, the handover command is carried in an RRC message. Optionally, the handover command is an HO command message, and the HO command message carries parameter information required for handing over the terminal device to the target cell.

S806: The terminal device is handed over from the source cell to the target cell.

Specifically, after receiving the handover command, the terminal device performs HO handover, and the terminal device disconnects a wireless connection to the source base station, and then is synchronized to the target base station.

S807: The source base station sends status information of the terminal device to the target base station.

Correspondingly, the target base station receives the status information of the terminal device from the source base station.

For example, the status information of the terminal device is a serial number status transfer (serial number status transfer) process.

S808: The target base station obtains a homomorphic computation key and information about the homomorphic task.

In a possible implementation, the source base station sends the homomorphic computation key and the information about the homomorphic task to the target base station.

It should be understood that there is an Xn link between the source cell and the target cell for terminal device handover, and the source base station exchanges the homomorphic task requirement, the homomorphic computation key, the information about the homomorphic task, and the like with the target base station through an Xn interface.

It should be understood that, in this case, the source base station serves as the old homomorphic computation party and sends the homomorphic computation key related to the homomorphic task to the new homomorphic computation party, that is, the target base station.

In a possible implementation, the HECF sends the homomorphic computation key and the information about the homomorphic task to the target base station.

It should be understood that, in S803, if the target base station reports, to the HECF, the requirement of the homomorphic task in which the terminal device that is performing cell handover participates and the homomorphic capability information of the target station, the HECF may send, to the target base station, the homomorphic computation key of the homomorphic task in which the terminal device participates and the information about the homomorphic task.

S809: The terminal device sends handover acknowledgment information to the target base station.

Correspondingly, the target base station receives the handover acknowledgment information from the terminal device.

Specifically, in S806, after completing random access to the target base station, the terminal device sends the handover acknowledgment information to the target base station.

S810: The target base station sends path switch request information to a core network.

Correspondingly, the core network receives a path switch request from the target base station.

The path switch request information includes the terminal device security capability.

It should be understood that, after receiving the path switch request from the target base station, the core network increases the next hop chaining counter parameter (next hop chaining counter, NCC) by 1 (that is, NCC+1), and updates a next hop parameter (next hop, NH) (that is, a new NH).

Optionally, in S811, the target base station sends downlink data to the terminal device, and the terminal device receives the downlink data.

The downlink data includes data related to homomorphic computation.

For example, the data related to homomorphic computation may be a homomorphic ciphertext obtained through homomorphic encryption, for example, an AI model and perception data.

Optionally, in S812, the terminal device performs homomorphic computation.

Specifically, when the terminal device needs to serve as the homomorphic computation party in the homomorphic task, the terminal device performs, based on the homomorphic task requirement and the homomorphic computation key, homomorphic computation on the data related to homomorphic computation.

For a specific process of homomorphic computation, refer to the related procedure of homomorphic computation in the conventional technology. This is not limited in this application.

S813: The core network sends path switch request acknowledge information to the target base station.

In a possible implementation, the path switch request acknowledge information includes the updated NCC+1 and the new NH in S810.

Optionally, in S814, the terminal device sends uplink data to the target base station.

Correspondingly, the target base station receives the uplink data from the terminal device.

The uplink data includes data related to homomorphic computation.

The uplink data includes data related to homomorphic computation.

For example, the data related to homomorphic computation may be a homomorphic ciphertext obtained through homomorphic encryption, for example, an AI model and perception data.

Optionally, in S815, the target base station performs homomorphic computation.

Specifically, when the target base station needs to serve as the homomorphic computation party in the homomorphic task, the target base station performs, based on the homomorphic task requirement and the homomorphic computation key, homomorphic computation on the data related to homomorphic computation.

Based on the foregoing solution, when the terminal device is handed over from the source base station to the target base station, the target base station, serving as the new homomorphic computation party, can obtain the related information of the homomorphic task corresponding to the terminal device from the source base station or the HECF, for example, the homomorphic computation key and the homomorphic task requirement, to complete the homomorphic task, thereby ensuring continuity of the homomorphic task of the terminal device in the handover process.

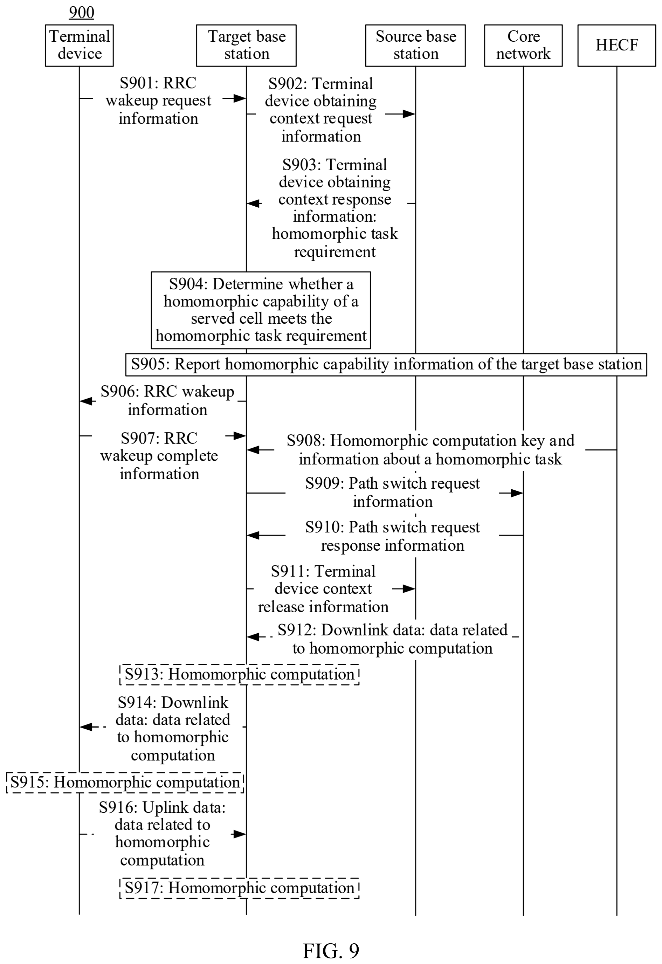

FIG. 9 is a diagram of a homomorphic encryption-based communication method 900 according to an embodiment of this application. In one homomorphic task, if a homomorphic participant changes, for example, a terminal device and an access node (for example, a RAN) are in an RRC inactive (inactive) state, and an access node and a core network are in a CM-connected state, when an air interface connection between the terminal device and the access node is released, but there is a connection between an AMF and the access node and there is a connection between the access node and a UPF, if the terminal device receives access node-based paging or the terminal device needs to send data to a network side, the terminal device triggers switching from the RRC_inactive state to the RRC_connected state. In this case, a homomorphic computation party is handed over from a previous base station (a source base station) serving the terminal device to a target base station (that is, the homomorphic computation party changes). However, if an upper-level key of a homomorphic key does not change, a homomorphic key does not need to be re-derived, and a new homomorphic computation party needs to obtain a homomorphic computation key related to the homomorphic task, to ensure continuity of the homomorphic task. In FIG. 9, the source base station is an old homomorphic computation party, and the target base station is the new homomorphic computation party. The following describes the method 900 in detail with reference to FIG. 9.

S901: The terminal device sends RRC wakeup request information to the target base station. Correspondingly, the target base station receives the RRC wakeup request information from the terminal device.

The RRC wakeup request information is used to request to switch the terminal device from the RRC_Inactive state to the RRC_connected state.

In a possible implementation, the terminal device and the access node are in the RRC inactive state, the air interface connection between the terminal device and the access node is released, the access node and the core network are in the CM-connected state, and there is the connection between the AMF and the access node and there is the connection between the access node and the UPF. If the terminal device receives access node-based paging or the terminal device needs to send the data to the network side, the terminal device sends the RRC wakeup request information to the target base station.

S902: The target base station sends terminal device context obtaining request information to the source base station. Correspondingly, the source base station receives the terminal device context obtaining request information from the target base station.

S903: The source base station sends terminal device context obtaining response information to the target base station. Correspondingly, the target base station receives the terminal device context obtaining response information from the source base station.

In a possible implementation, the terminal device context obtaining response information includes a homomorphic task requirement, a homomorphic computation key, and information about the homomorphic task.

In a possible implementation, the terminal device context obtaining response information includes a homomorphic task requirement.

For the foregoing homomorphic task requirement, refer to the related descriptions in S604. For the information about the homomorphic task, refer to the related descriptions in S517. Details are not described herein again.

S904: The target base station determines whether a homomorphic capability of a served cell meets the homomorphic task requirement.

Specifically, after receiving the terminal device context obtaining response information, the target base station determines whether the homomorphic capability of the cell served by the target base station meets the homomorphic task requirement.

In a possible implementation, when determining that the homomorphic capability of the served cell meets the homomorphic task requirement, the target base station reports homomorphic capability information of the target base station.

In a possible implementation, when the target base station determines that the homomorphic capability of the served cell does not meet the homomorphic task requirement, the target base station sends indication information to the source base station or a core network, to indicate that the homomorphic capability of the current cell served by the target base station does not meet the homomorphic task requirement. Further, the source base station or the core network re-determines a target base station to execute the homomorphic task.

S905: The target base station reports the homomorphic capability information of the target base station.

Specifically, when determining that the homomorphic capability of the served cell meets the homomorphic task requirement, the target base station reports the homomorphic capability information of the target base station.

In a possible implementation, the target base station reports the homomorphic capability information of the target base station to the core network.

In a possible implementation, the target base station reports, to an HECF, a requirement of a homomorphic task in which a terminal device that is performing cell handover participates and the homomorphic capability information of the target base station.

For the homomorphic capability information of the target base station, refer to the related descriptions of the homomorphic capability information in S509. Details are not described herein again.

S906: The target base station sends RRC wakeup information to the terminal device. Correspondingly, the terminal device receives the RRC wakeup information from the target base station.

S907: The terminal device sends RRC wakeup complete information to the target base station. Correspondingly, the target base station receives the RRC wakeup complete information from the terminal device.

Specifically, after being handed over from the RRC inactive state to the RRC_connected state based on the RRC wakeup information, the terminal device sends the RRC wake-up complete information to the target base station.

Optionally, in S908, the HECF sends the homomorphic computation key and the information about the homomorphic task to the target base station.

It should be understood that, in S903, if the terminal device context obtaining response information sent by the source base station to the target base station includes only the homomorphic task requirement, and in S905, when the target base station reports, to the HECF, the requirement of the homomorphic task in which the terminal device is performing cell handover participates and the homomorphic capability information of the target station, the HECF may send, to the target base station, the homomorphic computation key and the information about the homomorphic task of the terminal device.

S909: The target base station sends path switch request information to the core network. Correspondingly, the core network receives the path switch request information from the target base station.

The path switch request information is used to request to hand over a base station accessed by the terminal device from the source base station to the target base station.

S910: The core network sends path switch request response information to the target base station. Correspondingly, the target base station receives the path switch request response information from the core network.

The path switch request response information indicates that a base station accessed by the terminal device is allowed to be handed over from the source base station to the target base station.

S911: The target base station sends terminal device context release information to the source base station. Correspondingly, the source base station receives the terminal device context release information from the target base station.

The terminal device context release information indicates the source base station to release context information of the terminal device.

Optionally, in S912, the core network sends downlink data to the target base station.

The downlink data includes data related to homomorphic computation.

For example, the data related to homomorphic computation may be a homomorphic ciphertext obtained through homomorphic encryption, for example, privacy data like an AI model and perception data.

Optionally, in S913, the target base station performs homomorphic computation.

Specifically, when the target base station needs to serve as the homomorphic computation party in the homomorphic task, the target base station performs, based on the homomorphic task requirement and the homomorphic computation key, homomorphic computation on the data related to homomorphic computation.

Optionally, in S914, the target base station sends downlink data to the terminal device.

Optionally, in S915, the terminal device performs homomorphic computation.

Specifically, when the terminal device needs to serve as the homomorphic computation party in the homomorphic task, the terminal device performs, based on the homomorphic task requirement and the homomorphic computation key, homomorphic computation on the data related to homomorphic computation.

Optionally, in S916, the terminal device sends uplink data to the target base station.

The uplink data includes data related to homomorphic computation.

For example, the data related to homomorphic computation may be a homomorphic ciphertext obtained through homomorphic encryption, for example, privacy data like an AI model and perception data.

Optionally, in S917, the target base station performs homomorphic computation.

Specifically, when the target base station needs to serve as the homomorphic computation party in the homomorphic task, the target base station performs, based on the homomorphic task requirement and the homomorphic computation key, homomorphic computation on the data related to homomorphic computation.

Based on the foregoing solution, when the terminal device is handed over from the source base station to the target base station, the target base station, serving as the new homomorphic computation party, can obtain the related information of the homomorphic task corresponding to the terminal device from the source base station or the HECF, for example, the homomorphic computation key and the homomorphic task requirement, to complete the homomorphic task, thereby ensuring continuity of the homomorphic task of the terminal device in the handover process.

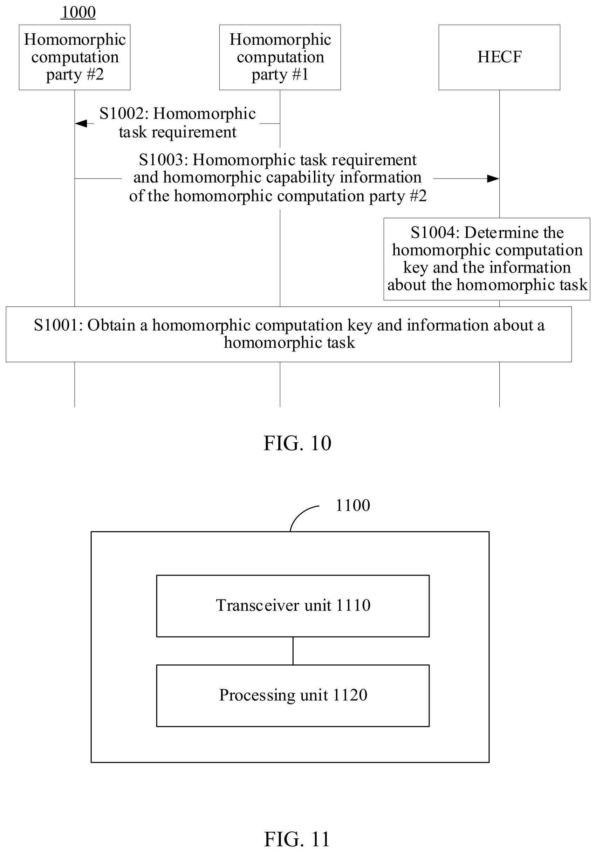

FIG. 10 is a diagram of a homomorphic encryption-based communication method 1000 according to an embodiment of this application. In one homomorphic task, if a homomorphic participant changes, a homomorphic computation party switches from a homomorphic computation party #1 to a homomorphic computation party #2 (for example, a source base station switches to a target base station, or an old AMF switches to a new AMF, or an old UPF switches to a new UPF (for example, UPF switching caused after UE moves out of a specific range)). However, if an upper-level key of a homomorphic encryption and decryption key does not change (for example, a homomorphic encryption and decryption key $K_{app}$ of an APP service or a homomorphic encryption and decryption key $K_{enc}$ of a core network element), a homomorphic key does not need to be re-derived. A new homomorphic computation party needs to obtain a homomorphic computation key related to the homomorphic task to ensure continuity of the homomorphic task. The following describes the method 1000 in detail with reference to FIG. 10.

S1001: The homomorphic computation party #2 obtains a homomorphic computation key and information about the homomorphic task.

In a possible implementation, the homomorphic computation party #2 receives the homomorphic computation key and the information about the homomorphic task from the homomorphic computation party #1.

The homomorphic computation party #1 is a homomorphic computation party before handover, and the homomorphic computation party #2 is a homomorphic computation party after handover.

The homomorphic computation party may be a network device (for example, a base station), a terminal device, a network function, or the like. This is not limited in this application.

For example, a first UPF receives the homomorphic computation key and the information about the homomorphic task from a second UPF. Specifically, the second UPF sends the homomorphic computation key and the information about the homomorphic task to the first UPF through an Xn interface.

In a possible implementation, the homomorphic computation party #2 receives the homomorphic computation key and the information about the homomorphic task from the HECF.

For example, the first UPF receives the homomorphic computation key and the information about the homomorphic task from the HECF. Specifically, the HECF sends the homomorphic computation key and the information about the homomorphic task to the first UPF through an Ng interface.

For the information about the homomorphic task, refer to the related descriptions in S516. Details are not described herein again.

Optionally, when the homomorphic computation party #2 receives the homomorphic computation key and the information about the homomorphic task from the HECF, before S1001, the method S1000 further includes the following steps.

S1002: The homomorphic computation party #1 sends a homomorphic task requirement to the homomorphic computation party #2.

Correspondingly, the homomorphic computation party #2 receives the homomorphic task requirement from the homomorphic computation party #1.

Optionally, the homomorphic task requirement includes an identifier of the homomorphic task, and the identifier of the homomorphic task is used to determine, based on the identifier, a homomorphic key corresponding to the homomorphic task and information about the homomorphic task.

For the homomorphic task requirement, refer to the related descriptions in S604. Details are not described herein again.

S1003: The homomorphic computation party #2 sends the homomorphic task requirement and homomorphic capability information of the homomorphic computation party #2 to the HECF.

Correspondingly, the HECF receives the homomorphic task requirement and the homomorphic capability information of the homomorphic computation party #2 from the homomorphic computation party #2.

For the homomorphic capability information of the homomorphic computation party #2, refer to the related descriptions in S509. Details are not described herein again.

S1004: The HECF determines the homomorphic computation key and the information about the homomorphic task.

Specifically, the HECF determines the homomorphic computation key and the information about the homomorphic task based on the homomorphic task requirement and the homomorphic capability information of the homomorphic computation party #2.

In a possible implementation, when the homomorphic task requirement includes the identifier of the homomorphic task, the HECF determines, based on the identifier of the homomorphic task, the homomorphic key corresponding to the homomorphic task and the information about the homomorphic task.

Based on the foregoing solution, when the homomorphic computation party of the homomorphic task corresponding to the terminal device changes due to movement of the terminal device, the new homomorphic computation party can obtain the related information of the homomorphic task, for example, the homomorphic computation key and the homomorphic task requirement, to complete the homomorphic task, thereby ensuring continuity of the homomorphic task in the movement process of the UE.

It can be understood that the examples in FIG. 4 to FIG. 10 in embodiments of this application are merely intended to help a person skilled in the art understand embodiments of this application, but are not intended to limit embodiments of this application to specific scenarios in the examples. It is clear that a person skilled in the art can make various equivalent modifications or variations based on the examples in FIG. 4 to FIG. 10, and such modifications or variations also fall within the scope of embodiments of this application.

It may be further understood that, some optional features in embodiments of this application may be independent of other features in some scenarios, or may be combined with other features in some scenarios. This is not limited.

It may be further understood that, the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that some message names, such as the homomorphic capability information or the first key parameter, in embodiments of this application are not intended to limit the protection scope of embodiments of this application.

It may be further understood that in the foregoing method embodiments, the methods and the operations implemented by the key generation party (the first network device, the HECF, or the terminal device) may also be implemented by a component (for example, a chip or a circuit) or a functional module of the key generation party. This is not limited. In correspondence to the method provided in the foregoing method embodiments, an embodiment of this application further provides a corresponding apparatus. The apparatus includes a corresponding module configured to perform the foregoing method embodiments. The module may be software, hardware, or a combination of the software and the hardware. It may be understood that the technical features described in the method embodiments are also applicable to the following apparatus embodiments.

It should be understood that the key generation party (the first network device, the HECF, or the terminal device) may perform a part or all of the steps in the foregoing embodiments. These steps or operations are merely examples. In embodiments of this application, other operations or variations of various operations may be further performed. In addition, the steps may be performed in another sequence different from that presented in the foregoing embodiments, and not all the operations in the foregoing embodiments may be performed.

The foregoing describes in detail the communication methods provided in embodiments of this application with reference to FIG. 4 to FIG. 10. The following describes in detail the communication apparatuses provided in embodiments of this application with reference to FIG. 11 to FIG. 13. It should be understood that descriptions of apparatus embodiments correspond to the descriptions of the method embodiments. Therefore, for content that is not described in detail, refer to the foregoing method embodiments. For brevity, details of a part of content are not described herein again.

FIG. 11 is a block diagram of a communication apparatus according to an embodiment of this application. An apparatus 1100 includes a transceiver unit 1110, and the transceiver unit 1110 may be configured to implement a corresponding communication function. The transceiver unit 1110 may also be referred to as a communication interface or a communication unit.

Optionally, the apparatus 1100 may further include a processing unit 1120, and the processing unit 1120 may be configured to perform data processing.

Optionally, the apparatus 1100 further includes a storage unit. The storage unit may be configured to store instructions and/or data. The processing unit 1120 may read the instructions and/or the data in the storage unit, so that the apparatus implements actions of different devices in the foregoing method embodiments, for example, actions of the key generation party (the first network device, the HECF, or the terminal device).

The apparatus 1100 may be configured to perform actions performed by the key generation party (the first network device, the HECF, or the terminal device) in the foregoing method embodiments. In this case, the apparatus 1100 may be the key generation party (the first network device, the HECF, or the terminal device) or a component of the key generation party (the first network device, the HECF, or the terminal device). The transceiver unit 1110 is configured to perform a receiving/sending-related operation of the key generation party (the first network device, the HECF, or the terminal device) in the foregoing method embodiments, and the processing unit 1120 is configured to perform a processing-related operation of the key generation party (the first network device, the HECF, and the terminal device) in the foregoing method embodiments.

It should be further understood that the apparatus 1100 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1100 may be specifically the key generation party (the first network device, the HECF, or the terminal device) in the foregoing embodiments, and may be configured to perform procedures and/or steps corresponding to the key generation party (the first network device, the HECF, or the terminal device) in the foregoing method embodiments, or the apparatus 1100 may be specifically the key generation party (the first network device, the HECF, or the terminal device) in the foregoing embodiments, and may be configured to perform procedures and/or steps corresponding to the key generation party (the first network device, the HECF, and the terminal device) in the foregoing method embodiments. To avoid repetition, details are not described herein again.

The apparatus 1100 in each of the foregoing solutions has functions of implementing corresponding steps performed by the key generation party (the first network device, the HECF, and the terminal device) in the foregoing methods, or the apparatus 1100 in each of the foregoing solutions has functions of implementing corresponding steps performed by the key generation party (the first network device, the HECF, and the terminal device) in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit 1110 may alternatively be a transceiver circuit (which may include, for example, a receiving circuit and a sending circuit), and the processing unit may be a processing circuit.

It should be noted that the apparatus in FIG. 11 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

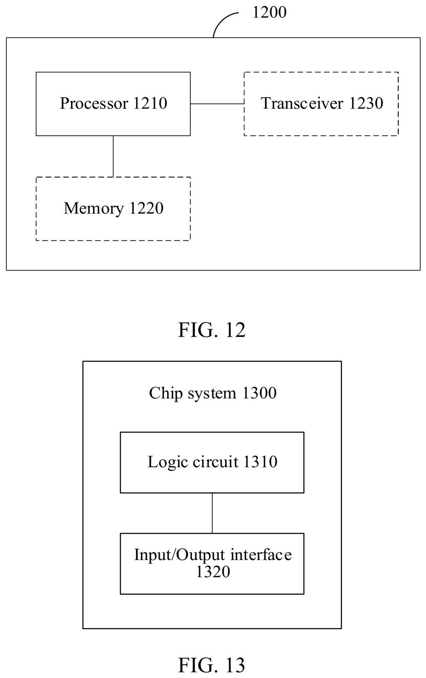

As shown in FIG. 12, an embodiment of this application provides another communication apparatus 1200. The apparatus 1200 includes a processor 1210. The processor 1210 is coupled to a memory 1220. The memory 1220 is configured to store a computer program or instructions and/or data. The processor 1210 is configured to execute the computer program or the instructions stored in the memory 1220, or read the data stored in the memory 1220, to perform the methods in the foregoing method embodiments.

Optionally, there are one or more processors 1210. Optionally, there are one or more memories 1220. Optionally, the memory 1220 is integrated with the processor 1210, or separately disposed.

Optionally, as shown in FIG. 12, the apparatus 1200 may further include a transceiver 1230. The transceiver 1230 is configured to receive and/or send a signal. For example, the processor 1210 is configured to control the transceiver 1230 to receive and/or send a signal.

In a solution, the apparatus 1200 is configured to implement operations performed by the key generation party (the first network device, the HECF, and the terminal device) in the foregoing method embodiments.

For example, the processor 1210 is configured to execute the computer program or the instructions stored in the memory 1220, to implement related operations of the key generation party in the foregoing method embodiments, for example, the method of the key generation party (the first network device, the HECF, and the terminal device) in any one of embodiments shown in FIG. 4 to FIG. 10, or the key generation party (the first network device, the HECF, and the terminal device) in any one of embodiments shown in FIG. 4 to FIG. 10.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory described in this specification intends to include but is not limited to these memories and any other appropriate types of memories.

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

As shown in FIG. 13, an embodiment of this application provides a chip system 1300. The chip system 1300 (or may also be referred to as a processing system) includes a logic circuit 1310 and an input/output interface (input/output interface) 1320.

The logic circuit 1310 may be a processing circuit in the chip system 1300. The logic circuit 1310 may be coupled to a storage unit, and invoke instructions from the storage unit, so that the chip system 1300 can implement the methods and functions in embodiments of this application. The input/output interface 1320 may be an input/output circuit in the chip system 1300, and outputs information processed by the chip system 1300, or inputs to-be-processed data or signaling information into the chip system 1300 for processing.

In a solution, the chip system 1300 is configured to implement operations performed by the key generation party (the first network device, the HECF, and the terminal device) in the foregoing method embodiments.

For example, the logic circuit 1310 is configured to implement a processing-related operation of the key generation party (the first network device, the HECF, and the terminal device) in the foregoing method embodiments, for example, a processing-related operation of the key generation party in any one of embodiments shown in FIG. 4 to FIG. 10. The input/output interface 1320 is configured to implement sending and/or receiving-related operations performed by the key generation party in the foregoing method embodiments, for example, sending and/or receiving-related operations performed by the key generation party in any one of embodiments shown in FIG. 4 to FIG. 10.

An embodiment of this application further provides a computer-readable storage medium. The computer-readable storage medium stores computer instructions used to implement the method performed by the key generation party (the first network device, the HECF, and the terminal device) in the foregoing method embodiments.

For example, when a computer program is executed by a computer, the computer is caused to implement the method performed by the key generation party (the first network device, the HECF, and the terminal device) in the foregoing method embodiments.

An embodiment of this application further provides a computer program product, including instructions. The instructions are executed by a computer to implement the method performed by the key generation party (the first network device, the HECF, and the terminal device) in the foregoing method embodiments.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments. In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computing device (which may be a personal computer, a server, a network device, or the like) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A homomorphic encryption-based communication method, comprising:

    obtaining, by a key generation party, a first key parameter, wherein the first key parameter corresponds to a key parameter of an updated root key of a network device accessed by a terminal device; and
    deriving, by the key generation party, a homomorphic encryption and decryption key based on the first key parameter using a homomorphic encryption and decryption algorithm, wherein the homomorphic encryption and decryption key is used for a homomorphic task in which the terminal device participates.

2.  The method according to claim 1, wherein when the key generation party is a first network device, obtaining, by the key generation party, the first key parameter comprises:

    receiving, by the first network device, the first key parameter from a second network device, wherein the second network device is a network device accessed by the terminal device before handover, and the first network device is a network device accessed by the terminal device after handover; or
    generating, by the first network device, the first key parameter, wherein the first network device is the network device accessed by the terminal device.

3.  The method according to claim 2, wherein the method further comprises:

    receiving, by the first network device, homomorphic capability information of the terminal device; and
    determining, by the first network device, the homomorphic encryption and decryption algorithm based on the homomorphic capability information of the terminal device.

4.  The method according to claim 3, wherein determining, by the first network device, the homomorphic encryption and decryption algorithm based on the homomorphic capability information of the terminal device comprises:

receiving, by the first network device, homomorphic capability information of a third network device; and determining, by the first network device, the homomorphic encryption and decryption algorithm based on the homomorphic capability information of the third network device and the homomorphic capability information of the terminal device, wherein the third network device is a device participating in executing the homomorphic task.

5. The method according to claim 3 or 4, wherein the method further comprises:
sending, by the first network device, first indication information to the terminal device, wherein the first indication information indicates an identifier of the homomorphic encryption and decryption algorithm.

6. The method according to claim 2, wherein the method further comprises:
receiving, by the first network device, an identifier of the homomorphic encryption and decryption algorithm from a homomorphic management device HECF.

7. The method according to claim 1, wherein when the key generation party is a homomorphic management device HECF, obtaining, by the key generation party, the first key parameter comprises:
generating, by the HECF, the first key parameter.

8. The method according to claim 7, wherein the method further comprises:

receiving, by the HECF, homomorphic capability information of the terminal device; and determining, by the HECF, the homomorphic encryption and decryption algorithm based on the homomorphic capability information of the terminal device.

9. The method according to claim 8, wherein determining, by the HECF, the homomorphic encryption and decryption algorithm based on the homomorphic capability information of the terminal device comprises:

receiving, by the HECF, homomorphic capability information of a third network device; and determining, by the HECF, the homomorphic encryption and decryption algorithm based on the homomorphic capability information of the third network device and the homomorphic capability information of the terminal device, wherein the third network device is a device participating in executing the homomorphic task.

10. The method according to any one of claims 7 to 9, wherein the method further comprises:
sending, by the HECF, the homomorphic encryption and decryption key to a first network device and the terminal device, wherein the first network device is the network device accessed by the terminal device.

11. The method according to claim 1, wherein when the key generation party is a terminal device, obtaining, by the key generation party, the first key parameter comprises:

receiving, by the terminal device, second indication information from a first network device, wherein the second indication information indicates that a root key of a network device accessed by the terminal device is updated, and the first network device is the network device accessed by the terminal device; and generating, by the terminal device, the first key parameter based on the second indication information.

12. The method according to claim 11, wherein the method further comprises:
receiving, by the terminal device, first indication information from the first network device or an HECF, wherein the first indication information indicates an identifier of the homomorphic encryption and decryption algorithm.

13. The method according to any one of claims 1 to 12, wherein deriving, by the key generation party, the homomorphic encryption and decryption key based on the first key parameter using the homomorphic encryption and decryption algorithm comprises:
deriving, by the key generation party, the homomorphic encryption and decryption key based on the first key parameter, the homomorphic encryption and decryption algorithm, and a second key parameter, wherein the second key parameter comprises at least one of the following: the identifier of the homomorphic encryption and decryption algorithm, a ciphertext modulus, a plaintext modulus, or a polynomial dimension.

14. The method according to any one of claims 1 to 13, wherein the method further comprises:

learning of, by the key generation party, a homomorphic task requirement, wherein the homomorphic task requirement indicates a parameter required for executing the homomorphic task; and

deriving, by the key generation party, the homomorphic encryption and decryption key based on the first key parameter using the homomorphic encryption and decryption algorithm comprises:

when the key generation party determines that the third network device meets the homomorphic task requirement, deriving, by the key generation party, the homomorphic encryption and decryption key based on the first key parameter, the homomorphic encryption and decryption algorithm, and the homomorphic task requirement, wherein the third network device is the device participating in executing the homomorphic task.

15. A homomorphic encryption-based communication method, comprising:

receiving, by a second network device, a homomorphic key and information about a homomorphic task of the terminal device from a first network device or a homomorphic management device HECF, wherein the homomorphic key is used to execute the homomorphic task in which the terminal device participates; and

executing, by the second network device, the homomorphic task based on the homomorphic key and the information about the homomorphic task, wherein

the first network device is a network device accessed by the terminal device before handover, and the second network device is a network device accessed by the terminal device after handover.

16. The method according to claim 15, wherein before receiving, by the second network device, the homomorphic key and the information about the homomorphic task of the terminal device from the homomorphic management device HECF, the method further comprises:

receiving, by the second network device, a homomorphic task requirement from the first network device, wherein the homomorphic task requirement indicates a parameter required for executing the homomorphic task; and

sending, by the second network device, the homomorphic task requirement and homomorphic capability information of the second network device to the homomorphic management device HECF, wherein the homomorphic computation key is determined based on the homomorphic task requirement and the homomorphic capability information of the second network device.

17. The method according to claim 15 or 16, wherein the second network device is a target base station, the first network device is a source base station, and the homomorphic computation key and the information about the homomorphic task are sent through an Xn interface.

18. The method according to claim 17, wherein before receiving, by the second network device, the homomorphic key and the information about the homomorphic task from the first network device or the homomorphic management device HECF, the method further comprises:

receiving, by the second network device, handover request information from the first network device, wherein the handover request information indicates to switch the network device accessed by the terminal device; and

sending, by the second network device, handover response information to the first network device, wherein the handover response information indicates that the network device accessed by the terminal device is capable of switching to the second network device.

19. The method according to claim 18, wherein the handover request information comprises the homomorphic task requirement, and sending, by the second network device, the handover response information to the first network device comprises:

when the second network device determines that the homomorphic task requirement is met, sending, by the second network device, the handover response information to the first network device.

20. The method according to claim 17, wherein before receiving, by the second network device, the homomorphic key and the information about the homomorphic task from the first network device or the homomorphic management device HECF, the method further comprises:

receiving, by the second network device, radio resource control RRC wakeup request information from the terminal device, wherein the RRC wakeup request information is used to request to switch the terminal device from a non-connected state to a connected state; and

sending, by the second network device, terminal device context obtaining request information to the first network device; and

receiving, by the second network device, the homomorphic key and the information about the homomorphic task from the first network device or the homomorphic management device HECF comprises:

receiving, by the second network device, terminal device context obtaining response information from the first network device, wherein the terminal device context obtaining response information comprises the homomorphic key and the information about the homomorphic task.

21. The method according to claim 20, wherein after receiving, by the second network device, the homomorphic key and the information about the homomorphic task from the first network device or the homomorphic management device HECF, the method further comprises:

sending, by the second network device, RRC wakeup information to the terminal device, wherein the RRC wakeup information indicates to switch the terminal device from the non-connected state to the connected state.

22. The method according to claim 21, wherein sending, by the second network device, the RRC wakeup information to the terminal device comprises:

when the second network device determines that a cell served by the second network device meets the homomorphic task requirement, sending, by the second network device, the RRC wakeup information to the terminal device.

23. The method according to claim 15 or 16, wherein the second network device is a second core network element, the first network device is a first core network element, the first core network element is a network device serving a cell of the terminal device before handover, the second core network element is a network device serving a cell of the terminal device after handover, and the homomorphic computation key and the information about the homomorphic task are sent through an Ng interface.

24. A homomorphic encryption-based communication method, comprising:

determining, by a homomorphic management device HECF, a homomorphic key based on a homomorphic task requirement and homomorphic capability information of a second network device, wherein the homomorphic key is used to execute a homomorphic task in which the terminal device participates, and the homomorphic task requirement indicates a parameter required for executing the homomorphic task; and

sending, by the HECF, the homomorphic key and information about the homomorphic task to the second network device, wherein

the second network device is a network device accessed by the terminal device after handover.

25. The method according to claim 24, wherein the method further comprises:

receiving, by the HECF, the homomorphic task requirement and the homomorphic capability information of the second network device from the second network device.

26. The method according to claim 25, wherein before determining, by the HECF, the homomorphic key based on the homomorphic task requirement and the homomorphic capability information of the second network device, the method further comprises:

receiving, by the HECF, indication information from the second network device, wherein the indication information indicates that a network device accessed by the terminal device switches.

27. A homomorphic encryption-based communication method, comprising:

receiving, by a first network device, first information from the second network device, wherein the first information indicates that the second network device meets a homomorphic task requirement, and the homomorphic task requirement indicates a parameter required for executing a homomorphic task in which the terminal device participates; and

sending, by the first network device, a homomorphic key and information about the homomorphic task to the second network device, wherein the homomorphic key and the information about the homomorphic task are used to execute the homomorphic task, wherein

the first network device is a network device accessed by the terminal device before handover, and the second network device is a network device accessed by the terminal device after handover.

28. The method according to claim 27, wherein the second network device is a target base station, the first network device is a source base station, and the homomorphic computation key and the information about the homomorphic task are sent through an Xn interface.

29. The method according to claim 28, wherein before sending, by the first network device, the homomorphic key and the information about the homomorphic task to the second network device, the method further comprises:

determining, by the first network device, that the network device accessed by the terminal device is to switch;
sending, by the first network device, handover request information to the second network device, wherein the handover request information indicates to switch the network device accessed by the terminal device;
receiving, by the first network device, handover response information from the second network device, wherein the handover response information indicates that the network device accessed by the terminal device is capable of switching to the second network device; and
sending, by the first network device, a handover command to the terminal device, wherein the handover command indicates to switch the network device accessed by the terminal device to the second network device.

30. The method according to claim 28, wherein before sending, by the first network device, the homomorphic key and the information about the homomorphic task to the second network device, the method further comprises:

sending, by the first network device, terminal device context obtaining request information to the second network device; and
sending, by the first network device, the homomorphic key and the information about the homomorphic task to the second network device comprises:
sending, by the first network device, terminal device context obtaining response information to the second network device, wherein the terminal device context obtaining response information comprises the homomorphic key and the information about the homomorphic task.

31. The method according to any one of claims 27 to 30, wherein the second network device is a second core network element, the first network device is a first core network element, the first core network element is a network device serving a cell of the terminal device before handover, the second core network element is a network device serving a cell of the terminal device after handover, and the homomorphic computation key and the information about the homomorphic task are sent through an Ng interface.

32. A communication apparatus, comprising a module or a unit configured to perform the method according to any one of claims 1 to 14.

33. A communication apparatus, comprising a module or a unit configured to perform the method according to any one of claims 15 to 23.

34. A communication apparatus, comprising a module or a unit configured to perform the method according to any one of claims 24 to 26.

35. A communication apparatus, comprising a module or a unit configured to perform the method according to any one of claims 27 to 31.

36. A communication system, comprising the communication apparatus according to claim 33, the communication apparatus according to claim 34, and the communication apparatus according to claim 35.

37. A communication apparatus, comprising:
a processor, configured to execute a computer program stored in a memory, to cause the communication apparatus to perform the method according to any one of claims 1 to 31, and/or cause, using a logic circuit, the communication apparatus to perform the method according to any one of claims 1 to 31.

38. The communication apparatus according to claim 37, wherein the communication apparatus further comprises the memory.

39. The communication apparatus according to claim 37 or 38, wherein the communication apparatus further comprises:
a communication interface, configured to perform receiving and/or sending of the processor.

40. A computer-readable storage medium, wherein the computer-readable storage medium stores a computer program or instructions; and when the computer program or the instructions are executed by a processor, the method according to any one of claims 1 to 31 is performed.

**41.** A computer program product comprising instructions, wherein when the computer program product runs on a computer, the method according to any one of claims 1 to 31 is performed.

**42.** A chip system, comprising a processor, configured to invoke a computer program or instructions from a memory and run the computer program or the instructions, to cause a communication apparatus in which the chip system is installed to implement the method according to any one of claims 1 to 31.

FIG. 1-1

FIG. 1-2

FIG. 2

FIG. 3

400

S410: A key generation party obtains a first key parameter, where the first key parameter is a key parameter of an updated root key of a network device accessed by a terminal device

S420: The key generation party derives a homomorphic encryption and decryption key based on the first key parameter using a homomorphic encryption and decryption algorithm, where the homomorphic encryption and decryption key is used to execute a homomorphic task in which the terminal device participates

FIG. 4

500

HECF

Second AMF

First AMF

Access node

Terminal device

S501: First registration request information

S502: AMF selection

S503: Second registration request information

S504: Terminal device context forwarding request information

S505: Terminal device context forwarding response information: first $K_{AMF}$

S506: Perform identity authentication on the terminal device

S507: Key change indication

S508: Generate the first $K_{AMF}$

Case 1

S509: Homomorphic capability information of the access node

S510: Homomorphic capability information of the terminal device

S511: Determine a homomorphic encryption and decryption algorithm and a key derivation parameter

S512: Derive a new homomorphic encryption and decryption key

S513: Derive a new homomorphic computation key

S514: First indication information

S515: Derive the new homomorphic encryption and decryption key

S516: Derive the new homomorphic computation key

S517: Homomorphic computation key and information about a homomorphic task

TO FIG. 5B

TO FIG. 5B

FIG. 5A

48

Case 2

S518: Homomorphic capability information of the access node

S519: Homomorphic capability information of the terminal device

S520: Determine a homomorphic encryption and decryption algorithm and a key derivation parameter

S521: First indication information

S522: Derive a new homomorphic encryption and decryption key

S523: Derive a new homomorphic computation key

S524: Derive the new homomorphic encryption and decryption key

S525: Derive the new homomorphic computation key

S526: Homomorphic computation key and information about a homomorphic task

Case 3

S527: Homomorphic capability information of the access node

S528: Homomorphic capability information of the terminal device

S529: Determine a homomorphic encryption and decryption algorithm and a key derivation parameter

S530: Derive a new homomorphic encryption and decryption key

S531: Derive a new homomorphic computation key

S532: Homomorphic key

S540: Complete information

FIG. 5B

600

**FIG. 6A**

Terminal device | Source base station | Target base station | Second AMF | First AMF | HECF

S601: Handover decision

S602: Handover request information

S603: Determine a first AMF

S604: Terminal device context creation request information: first $K_{AMF}$ and homomorphic task requirement

S605: Handover request information

S606: Handover request acknowledgment information: homomorphic capability information

S607: Determine a homomorphic encryption and decryption algorithm and a key derivation parameter

S608: Derive a new homomorphic encryption and decryption key

S609: Derive a new homomorphic computation key

S610: Terminal device context creation response information

S611: Homomorphic computation key and information about a homomorphic task

S612: Key change indication

S613: Key change indication

S614: Perform cell handover

S615: Generate the first $K_{AMF}$

S616: Derive the new homomorphic encryption and decryption key

Case 1

TO FIG. 6B

TO FIG. 6B

CONT. FROM FIG. 6A

CONT. FROM FIG. 6A

S617: Derive the new homomorphic computation key

S618: Uplink data: data related to homomorphic computation

S619: Homomorphic computation

S620: Handover notification information

S621: Downlink data: data related to homomorphic computation

S622: Homomorphic computation

Case 2

S623: First information

S624: First indication information

S625: Derive a new homomorphic encryption and decryption key

S626: Derive a new homomorphic computation key

S627: Derive the new homomorphic encryption and decryption key

S628: Derive the new homomorphic computation key

S629: Homomorphic computation key and information about a homomorphic task

Case 3

S630: First information

S631: Determine a homomorphic encryption and decryption algorithm and a key derivation parameter

S632: Derive a new homomorphic encryption and decryption key

S633: Derive a new homomorphic computation key

S634: Homomorphic computation key and information about a homomorphic task

S635: Homomorphic key

FIG. 6B

700

| Key generation party | Homomorphic decryption party | Homomorphic computation party |

S710: Derive a new homomorphic key

S720: Send a homomorphic encryption key to a homomorphic encryption party

S730: Homomorphic decryption key

S740: Homomorphic computation key

FIG. 7

800

| Terminal device | Source base station | Target base station | Core network | HECF |

S801: Handover request information

S802: Handover admission decision

S803: Report homomorphic capability information of the target base station

S804: Handover request response information

S805: Handover command

S806: Hand over from a source cell to a target cell

S807: Status information of the terminal device

S808: Obtain a homomorphic computation key and information about a homomorphic task

S809: Handover acknowledgment information

S810: Path switch request information

S811: Downlink data: data related to homomorphic computation

S812: Homomorphic computation

S813: Path switch request acknowledge information

S814: Uplink data: data related to homomorphic computation

S815: Homomorphic computation

FIG. 8

900

| Terminal device | Target base station | Source base station | Core network | HECF |
|---|---|---|---|---|

S901: RRC wakeup request information →

S902: Terminal device obtaining context request information →

S903: Terminal device obtaining context response information: homomorphic task requirement ←

S904: Determine whether a homomorphic capability of a served cell meets the homomorphic task requirement

S905: Report homomorphic capability information of the target base station

← S906: RRC wakeup information

S907: RRC wakeup complete information →

← S908: Homomorphic computation key and information about a homomorphic task

S909: Path switch request information →

← S910: Path switch request response information

S911: Terminal device context release information →

← S912: Downlink data: data related to homomorphic computation

S913: Homomorphic computation

← S914: Downlink data: data related to homomorphic computation

S915: Homomorphic computation

S916: Uplink data: data related to homomorphic computation →

S917: Homomorphic computation

FIG. 9

1000

| Homomorphic computation party #2 | Homomorphic computation party #1 | HECF |
|---|---|---|

S1002: Homomorphic task requirement

S1003: Homomorphic task requirement and homomorphic capability information of the homomorphic computation party #2

S1004: Determine the homomorphic computation key and the information about the homomorphic task

S1001: Obtain a homomorphic computation key and information about a homomorphic task

FIG. 10

1100

Transceiver unit 1110

Processing unit 1120

FIG. 11

1200

Processor 1210 — Transceiver 1230

Memory 1220

## FIG. 12

Chip system 1300

Logic circuit 1310

Input/Output interface 1320

## FIG. 13

## INTERNATIONAL SEARCH REPORT

| International application No. |
|---|
| **PCT/CN2023/110348** |

| A. | CLASSIFICATION OF SUBJECT MATTER |
|---|---|

H04L9/08(2006.01)i

According to International Patent Classification (IPC) or to both national classification and IPC

| B. | FIELDS SEARCHED |
|---|---|

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, ENTXTC, DWPI, CNKI, IEEE, 3GPP: 同态, 加密, 秘密, 密钥, 私钥, 公钥, 更新, 重新, 生成, 派生, 根密钥, 切换, homomorphic encryption, key, updat+, generat+, HECF, root, handover+

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022198671 A1 (HUAWEI TECHNOLOGIES CO., LTD.) 29 September 2022 (2022-09-29) description, page 4, line 36 to page 12, line 12 | 1-42 |
| A | CN 110830996 A (TELECOMMUNICATION SCIENCE AND TECHNOLOGY RESEARCH INSTITUTE CO., LTD.) 21 February 2020 (2020-02-21) entire document | 1-42 |
| A | CN 113660085 A (NORTH CHINA UNIVERSITY OF TECHNOLOGY) 16 November 2021 (2021-11-16) entire document | 1-42 |
| A | CN 116261135 A (ZHONGWEIJIAN TECHNOLOGY CO., LTD.) 13 June 2023 (2023-06-13) entire document | 1-42 |
| A | WO 2018053271 A1 (IDAC HOLDINGS, INC.) 22 March 2018 (2018-03-22) entire document | 1-42 |

☑ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 March 2024** | **03 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**EP 4 746 339 A1**

**INTERNATIONAL SEARCH REPORT**

| International application No. |
| --- |
| **PCT/CN2023/110348** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2022222152 A1 (GUANGDONG OPPO MOBILE TELECOMMUNICATIONS CORP., LTD.) 27 October 2022 (2022-10-27)<br>entire document | 1-42 |
| A | WO 2023130705 A1 (HUAWEI TECHNOLOGIES CO., LTD.) 13 July 2023 (2023-07-13)<br>entire document | 1-42 |
| A | HUAWEI et al. "Resolve Editor's Note in 6.15 of TR 33.885"<br>*3GPP TSG SA WG3 (Security) Meeting #87, S3-171084*, 19 May 2017 (2017-05-19),<br>pages 1-3 | 1-42 |

Form PCT/ISA/210 (second sheet) (July 2022)

**INTERNATIONAL SEARCH REPORT**
Information on patent family members

International application No.

**PCT/CN2023/110348**

| Patent document cited in search report | | | Publication date (day/month/year) | Patent family member(s) | | | Publication date (day/month/year) |
|---|---|---|---|---|---|---|---|
| WO | 2022198671 | A1 | 29 September 2022 | CN | 116941263 | A | 24 October 2023 |
| CN | 110830996 | A | 21 February 2020 | None | | | |
| CN | 113660085 | A | 16 November 2021 | None | | | |
| CN | 116261135 | A | 13 June 2023 | None | | | |
| WO | 2018053271 | A1 | 22 March 2018 | None | | | |
| WO | 2022222152 | A1 | 27 October 2022 | EP | 4328815 | A1 | 28 February 2024 |
| | | | | CN | 117157651 | A | 01 December 2023 |
| WO | 2023130705 | A1 | 13 July 2023 | CN | 116468132 | A | 21 July 2023 |

Form PCT/ISA/210 (patent family annex) (July 2022)